(19) Europäisches Patentamt
European Patent Office
Office européen des brevets

(11) **EP 4 611 455 A1**

(12) **EUROPEAN PATENT APPLICATION**
published in accordance with Art. 153(4) EPC

(43) Date of publication:
**03.09.2025 Bulletin 2025/36**

(21) Application number: **23929298.0**

(22) Date of filing: **30.03.2023**

(51) International Patent Classification (IPC):
**H04W 72/0446** *(2023.01)*

(52) Cooperative Patent Classification (CPC):
**H04W 72/0446**

(86) International application number:
**PCT/CN2023/085093**

(87) International publication number:
**WO 2024/197701 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **New H3C Technologies Co., Ltd.**
**Hangzhou, Zhejiang 310052 (CN)**

(72) Inventors:
• **ZHOU, Lei**
**Beijing 100102 (CN)**
• **KONG, Lei**
**Beijing 100102 (CN)**

(74) Representative: **Bandpay & Greuter**
**11, rue Christophe Colomb**
**75008 Paris (FR)**

(54) **DATA TRANSMISSION METHOD AND APPARATUS, AND ELECTRONIC DEVICE**

(57) The present disclosure provides data transmission methods and apparatuses and an electronic device. The method includes: receiving, by a user equipment, a resource configuration message from a base station equipment, where the resource configuration message includes configuration information of a transport block over multiple slots (TBoMS) resource; determining, based on the configuration information of the TBoMS resource, the TBoMS resource; where the TBoMS resource carries N transport blocks, N is a positive integer greater than 1, and the TBoMS resource carrying first-type transport blocks included in the N transport blocks overlaps with an uplink sub-band of a sub-band full duplex (SBFD) time-frequency resource; and based on the TBoMS resource, sending, by the user equipment, uplink data to the base station equipment. In the technical solutions of the present disclosure, the resource utilization rate is improved.

Receive a resource configuration message from a base station equipment, where the resource configuration message includes configuration information of a TBoMS resource; determine, based on the configuration information of the TBoMS resource, the TBoMS resource — 111

Send uplink data to the base station equipment based on the TBoMS resource — 112

FIG. 1A

**Description**

**TECHNICAL FIELD**

The present disclosure relates to the field of communication technologies, and in particular to data transmission methods, apparatuses and electronic devices.

**BACKGROUND**

Time division duplex (TDD) systems are widely applied in mobile communication systems such as 5G system and the like. In the TDD systems, a frame structure is divided into a downlink (DL) slot, an uplink (UL) slot and a flexible slot. The DL slot includes a plurality of DL symbols, and downlink data is processed on frequency domain resources corresponding to these DL symbols. The UL slot includes a plurality of UL symbols, and uplink data is processed on frequency domain resources corresponding to these UL symbols. The flexible slot includes at least one flexible (F) symbol. The F symbol may be used for DL, and namely, downlink data is processed on frequency domain resources corresponding to the F symbol; the F symbol may also be used for UL, and namely, uplink data is processed on the frequency domain resources corresponding to the F symbol; the F symbol may also be used for guard period (GP), and namely, uplink-downlink switching protection is performed on the frequency domain resources corresponding to the F symbol. The TDD system may work in a half duplex (HD) mode, that is, at a same moment, same frequency domain resources can be used only for UL or DL.

**SUMMARY**

The present disclosure provides a data transmission method, which is performed by a user equipment. The method includes:

receiving a resource configuration message from a base station equipment, where the resource configuration message includes configuration information of a transport block over multiple slots (TBoMS) resource; based on the configuration information of the TBoMS resource, determining the TBoMS resource; where the TBoMS resource carries N transport blocks, N is a positive integer greater than 1, and the TBoMS resource carrying first-type transport blocks included in the N transport blocks overlaps with an uplink sub-band of a sub-band full duplex (SBFD) time-frequency resource; and
sending, based on the TBoMS resource, uplink data to the base station equipment.

The present disclosure provides a data transmission method, which is performed by a base station equipment. The method includes:

assigning a transport block over multiple slots (TBoMS) resource to a user equipment, where the TBoMS resource carries N transport blocks, N is a positive integer greater than 1, and the TBoMS resource carrying first-type transport blocks included in the N transport blocks overlaps with an uplink sub-band of a sub-band full duplex (SBFD) time-frequency resource;
sending a resource configuration message to the user equipment, where the resource configuration message includes configuration information of the TBoMS resource; the user equipment determines the TBoMS resource based on the configuration information of the TBoMS resource, and based on the TBoMS resource, sends uplink data to the base station equipment; and
receiving the uplink data sent by the user equipment based on the TBoMS resource.

The present disclosure provides a data transmission apparatus, which is applied in a user equipment. The apparatus includes:

a receiving module, configured to receive a resource configuration message from a base station equipment, where the resource configuration message includes configuration information of a transport block over multiple slots (TBoMS) resource;
a determining module, configured to determine, based on the configuration information of the TBoMS resource, the TBoMS resource; where the TBoMS resource carries N transport blocks, N is a positive integer greater than 1, and the TBoMS resource carrying first-type transport blocks included in the N transport blocks overlaps with an uplink sub-band of a sub-band full duplex (SBFD) time-frequency resource; and
a sending module, configured to send, based on the TBoMS resource, uplink data to the base station equipment.

The present disclosure provides a data transmission apparatus, which is applied to a base station equipment. The apparatus includes:

an assigning module, configured to assign a transport block over multiple slots (TBoMS) resource to a user equipment, where the TBoMS resource carries N transport blocks, N is a positive integer greater than 1, and the TBoMS resource carrying first-type transport blocks included in the N transport blocks overlaps with an uplink sub-band of a sub-band full duplex (SBFD) time-frequency resource;

a sending module, configured to send a resource configuration message to the user equipment, where the resource configuration message includes configuration information of the TBoMS resource; the user equipment determines the TBoMS resource based on the configuration information of the TBoMS resource, and based on the TBoMS resource, sends uplink data to the base station equipment; and

a receiving module, configured to receive the uplink data sent by the user equipment based on the TBoMS resource.

The present disclosure provides an electronic device, including a processor and a machine-readable storage medium, where the machine-readable storage medium stores machine executable instructions executable by the processor; the processor is configured to execute the machine executable instructions to perform the above data transmission methods.

It can be seen from the above technical solutions that the transport block over multiple slots (TBoMS) resource carries N transport blocks, and TBoMS resource carrying transport blocks included in the N transport blocks overlaps with the uplink sub-band of the sub-band full duplex (SBFD) time-frequency resource, that is, the uplink sub-band of the SBFD time-frequency resource is used as the TBoMS resource; thus, in a case of overlap of the SBFD time-frequency resource and the TBoMS resource, the user equipment (UE) can perform data transmission by using the TBoMS resource, and transmit the uplink data of the TBoMS resource by using the SBFD time-frequency resource (i.e., uplink sub-band) of the downlink slot. In this way, the transmission reliability of the uplink data and the cell coverage radius can be further improved, such that the SBFD time-frequency resource configuration and the TBoMS transmission mechanism can be effectively combined and implemented. From the aspect of entire system, the cell coverage scope can be increased, the transmission delay can be reduced, and the uplink transmission capacity can be increased. Hence, the data transmission of the TDD system can be supported; the resource utilization rate is improved; the network coverage and the network capacity are enhanced; the uplink transmission resource and the cell coverage scope are increased; the uplink transmission delay is diminished; and the uplink transmission capacity is increased.

## BRIEF DESCRIPTION OF DRAWINGS

FIGS. 1A and 1B are flowcharts illustrating a data transmission method according to an example of the present disclosure.

FIGS. 2A to 2E are schematic diagrams illustrating a TBoMS resource and an SBFD time-frequency resource according to an example of the present disclosure.

FIGS. 3A to 3F are schematic diagrams illustrating a TBoMS resource and an SBFD time-frequency resource according to an example of the present disclosure.

FIGS. 4A to 4H are schematic diagrams illustrating a TBoMS resource and an SBFD time-frequency resource according to an example of the present disclosure.

FIGS. 5A to 5D are schematic diagrams illustrating a joint channel estimate method according to an example of the present disclosure.

## DETAILED DESCRIPTION

The terms used herein are used to only describe particular examples rather than limit the present disclosure. The singular forms such as "a", "said", and "the" used in the present disclosure and the appended claims are also intended to include multiple, unless the context clearly indicates otherwise. It is also to be understood that the term "and/or" as used herein refers to and includes any or all possible combinations of one or more associated listed items.

It is to be understood that, although the terms "first," "second," "third," and the like may be used in the present disclosure to describe various information, such information should not be limited to these terms. These terms are only used to distinguish one category of information from another. For example, without departing from the scope of the present disclosure, first information may be referred as second information; and similarly, the second information may also be referred as the first information. Depending on the context, the term "if" as used herein may be interpreted as "when" or "upon" or "in response to determining".

Time division duplex (TDD) system can work in a half duplex (HD) mode, that is, at a same moment, a same frequency domain resource can be used only for uplink (UL) or downlink (DL). In order to use the frequency domain resource more flexibly and increase the resource utilization rate, the TDD system can also work in a full duplex (FD) mode, that is, at a same moment, same frequency domain resource can be used for UL and DL at the same time, and in other words, uplink data and downlink data can be processed on the same frequency domain resource at the same time.

In the TDD system, a frame structure can be divided into a DL slot, a UL slot and a flexible slot. Once the frame structure is determined, the UE (User Equipment) can perform data reception and transmission based on the frame structure. For a UE adopting the HD mode, a base station equipment (e.g., gNB and the like) schedules the UE to perform transmission and reception based on frame structure. For a UE adopting the FD mode, the base station equipment schedules the UE to perform transmission, reception or simultaneous transmission and reception based on frame structure. In conclusion, the base station equipment can configure a frame structure and notify the frame structure to the UE, such that the UE obtains the frame structure to perform data reception and transmission correctly. From another aspect, after the UE obtains the frame structure, the UE can obtain a possible inter-UE interference, and thus interference cancellation technology can be used to mitigate the interference, to improve communication reliability.

In an example, in the TDD system, for a frame structure with downlink transmission as main, more DL slots are usually configured, and thus, less UL slots are configured. In this case, the uplink transmission rate is limited, and the transmission delay of the uplink data is increased, leading to larger delay of the uplink transmission, and the uplink service is not utilized.

According to an example of the present disclosure, there is provided a data transmission method. By using the SBFD time-frequency resource, flexible downlink frequency domain resource and uplink frequency domain resource are configured for the UE. In this way, uplink data can be transmitted on the uplink frequency domain resource, that is, the downlink slot or flexible slot can be used to configure the uplink frequency domain resource, and the uplink data is transmitted through the uplink frequency domain resource. Thus, the uplink transmission rate can be increased, and the transmission delay of the uplink data can be reduced. Furthermore, the uplink slot or flexible slot can be used to configure the downlink frequency domain resource, and the downlink data is transmitted through the downlink frequency domain resource. Thus, the downlink transmission rate is increased and the transmission delay of the downlink data is reduced.

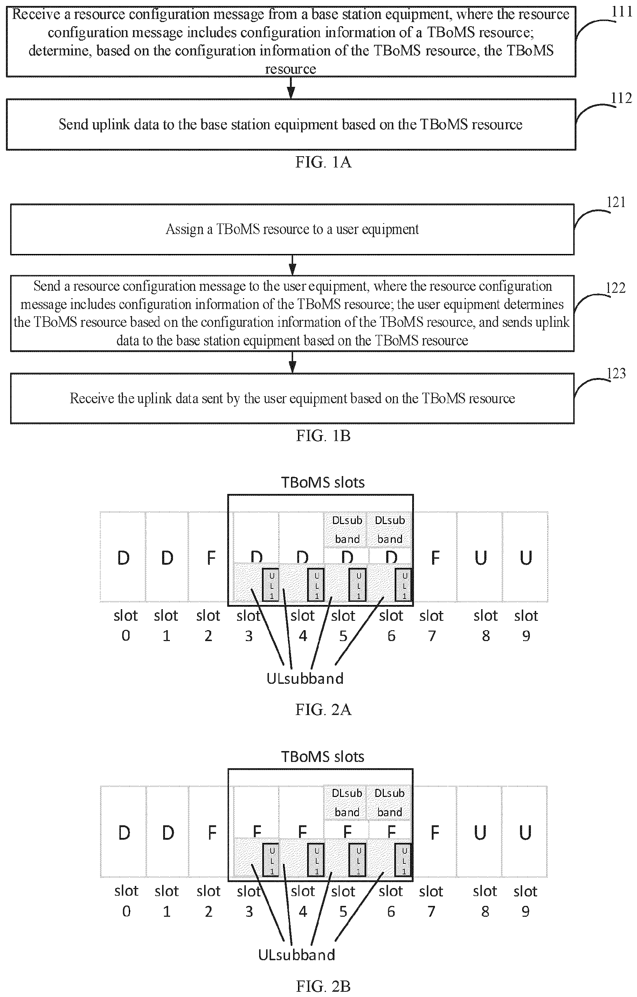

According to an example of the present disclosure, there is provided a data transmission method, which is performed by a user equipment. As shown in FIG. 1A, it is a flowchart of the data transmission method. The method includes the following steps.

At step 111, a resource configuration message is received from a base station equipment, where the resource configuration message includes configuration information of a transport block over multiple slots (TBoMS) resource; based on the configuration information of the TBoMS resource, the TBoMS resource is determined.

The TBoMS resource can carry N transport blocks, N is a positive integer greater than 1, and the TBoMS resource carrying first-type transport blocks included in the N transport blocks can overlap with an uplink sub-band of a sub-band full duplex (SBFD) time-frequency resource.

At step 112, uplink data is sent to the base station equipment based on the TBoMS resource.

According to an example of the present disclosure, there is provided a data transmission method which is performed by a base station equipment. As shown in FIG. 1B, it is a flowchart of the data transmission method. The method includes the following steps.

At step 121, a TBoMS resource is assigned to a user equipment.

The TBoMS resource can carry N transport blocks, N is a positive integer greater than 1, and the TBoMS resource carrying first-type transport blocks included in the N transport blocks can overlap with an uplink sub-band of a SBFD time-frequency resource.

At step 122, a resource configuration message is sent to the user equipment, where the resource configuration message includes configuration information of the TBoMS resource; the user equipment determines the TBoMS resource based on the configuration information of the TBoMS resource, and sends uplink data to the base station equipment based on the TBoMS resource.

At step 123, the uplink data sent by the user equipment based on the TBoMS resource is received.

In an example, the SBFD time-frequency resource can be in a downlink slot or flexible slot. If the TBoMS resource carrying only first-type transport blocks included in the N transport blocks overlaps with the uplink sub-band of the SBFD time-frequency resource, the base station equipment sends one resource configuration message to the user equipment, and the user equipment receives one resource configuration message from the base station equipment. The resource configuration message can include configuration information of the first-type transport blocks, and the resource configuration message can be a dynamic resource configuration message or a semi-static resource configuration message.

In an example, the SBFD time-frequency resource can be in the downlink slot or flexible slot. If the TBoMS resource carrying first-type transport blocks included in the N transport blocks overlaps with the uplink sub-band of the SBFD time-frequency resource, and further include second-type transport blocks in an uplink slot, the base station equipment sends one resource configuration message to the user equipment, and the user equipment receives one resource configuration message from the base station equipment. The one resource configuration message includes configuration information of the second-type transport blocks and the configuration information of the first-type transport blocks, and the one resource configuration message can be a dynamic resource configuration message or a semi-static resource configuration message.

In an example, if the TBoMS resource carrying first-type transport blocks included in the N transport blocks overlaps with the uplink sub-band of the SBFD time-frequency resource, and further include the second-type transport blocks in the uplink slot, the base station equipment sends a first resource configuration message and a second resource configuration message to the user equipment, and the user equipment receives the first resource configuration message and the second resource configuration message from the base station equipment. The first resource configuration message and the second resource configuration message can be sent separately or simultaneously, which can be set flexibly. The first resource configuration message includes the configuration information of the second-type transport blocks, and the second resource configuration message includes the configuration information of the first-type transport blocks. The first resource configuration message can be a dynamic resource configuration message or a semi-static resource configuration message, and the second resource configuration message can be a dynamic resource configuration message or a semi-static resource configuration message. The TBoMS resource carrying N transport blocks can be configured only in the SBFD slot or configured in the uplink slot and SBFD slot.

In an example, the N transport blocks occupy non-continuous symbols in N slots, and each transport block occupies at least one symbol in one slot. Alternatively, the N transport blocks occupy non-continuous symbols in A slots, where A is a positive integer less than N. Alternatively, the N transport blocks occupy continuous symbols in B slots, where B is a positive integer less than N.

In an example, sending, by the user equipment, the uplink data to the base station equipment based on the TBoMS resource, may include: based on resource overlap between the TBoMS resource and the SBFD time-frequency resource, determining a target transport block bit number carried by the TBoMS resource, and based on the TBoMS resource, sending uplink data matching the target transport block bit number to the base station equipment, such that the base station equipment receives the uplink data matching the target transport block bit number.

In an example, based on the resource overlap between the TBoMS resource and the SBFD time-frequency resource, determining, by the user equipment, the target transport block bit number carried by the TBoMS resource, may include: based on the resource overlap, determining a target number of target physical resource blocks (PRBs), where the target PRBs are PRBs in the TBoMS resource and in the uplink sub-band of the SBFD time-frequency resource; based on the target number of the target PRBs and a bit number transmitted per PRB, determining the target transport block bit number carried by the TBoMS resource.

In an example, based on the resource overlap, determining the target number of the target PRBs can include: if the TBoMS resource carrying the first-type transport blocks is in the uplink sub-band of the SBFD time-frequency resource, based on a total number N of the transport blocks and a number of the PRBs occupied by the transport blocks, determining the target number of the target PRBs; or, if a first part of PRBs of the TBoMS resource carrying the first-type transport blocks is in the uplink sub-band of the SBFD time-frequency resource, and a second part of PRBs is outside the uplink sub-band of the SBFD time-frequency resource, based on the total number N of the transport blocks, the number of the PRBs occupied by the transport blocks, the number of the first-type transport blocks, and the number of the PRBs occupied by the second part of PRBs, determining the target number of the target PRBs; or, based on the number of the second-type transport blocks, the number of the PRBs occupied by the transport blocks, the number of the first-type transport blocks, and the number of the PRBs occupied by the first part of PRBs, determining the target number of the target PRBs.

In an example, based on the resource overlap, determining the target number of the target PRBs can include: if the first part of PRBs of the TBoMS resource carrying the first-type transport blocks is in the uplink sub-band of the SBFD time-frequency resource, the second part of PRBs is outside the uplink sub-band of the SBFD time-frequency resource, a third part of PRBs of the TBoMS resource carrying the second-type transport blocks is in a downlink sub-band or guard sub-band of the SFBD time-frequency resource of the uplink slot, and a fourth part of PRBs is in a non-SBFD time-frequency resource of the uplink slot, based on the total number N of the transport blocks, the number of the PRBs occupied by the transport blocks, the number of the first-type transport blocks, the number of the PRBs occupied by the second part of PRBs, the number of the second-type transport blocks and the number of the PRBs occupied by the third part of PRBs, determining the target number of the target PRBs; or based on the number of the first-type transport blocks, the number of the PRBs occupied by the first part of PRBs, the number of the second-type transport blocks, and the number of the PRBs occupied by the fourth part of PRBs, determining the target number of the target PRBs.

In an example, if the first part of PRBs of the TBoMS resource carrying the first-type transport blocks is in the uplink sub-band of the SBFD time-frequency resource, the second part of PRBs is outside the uplink sub-band of the SBFD time-frequency resource, and the second part of PRBs is configured to carry a demodulation reference signal (DMRS) in the uplink data, the user equipment may send the DMRS to the base station equipment based on the TBoMS resource, such that the base station equipment performs joint channel estimate on the uplink data based on the DMRS; alternatively, the user equipment may forbid sending the DMRS to the base station equipment based on the TBoMS resource, such that the base station equipment performs joint channel estimate on the uplink data or cancels joint channel estimate on the uplink data.

In an example, the base station equipment can perform joint channel estimate on the uplink data or cancel joint channel estimate on the uplink data. For example, the base station equipment can cancel the joint channel estimate performed on the uplink data based on a target channel estimate result corresponding to the second part of PRBs.

For another example, the base station equipment can obtain a target channel estimate result corresponding to the second part of PRBs, and based on the target channel estimate result, perform joint channel estimate on the uplink data.

In an example, the base station equipment obtains the target channel estimate result corresponding to the second part of PRBs, which includes but not limited to: if the second part of PRBs include DMRS, determining a target DMRS based on the DMRS in the second part of PRBs, and based on the target DMRS, determining the target channel estimate result; where the user equipment sends the DMRS only on the second part of PRBs. Alternatively, if the second part of PRBs does not include the DMRS, determining the target channel estimate result based on a channel estimate result of neighboring PRBs of the second part of PRBs. Alternatively, if the second part of PRBs does not include the DMRS, and the neighboring PRBs of the second part of PRBs include the DMRS corresponding to the second part of PRBs, determining the target DMRS based on the DMRS in the neighboring PRBs, and based on the target DMRS, determining the target channel estimate result; where the user equipment sends the DMRS corresponding to the second part of PRBs on the neighboring PRBs. Alternatively, if the second part of PRBs does not include the DMRS, performing linear interpolation on DMRS in previous PRBs of the second part of PRBs and DMRS in next PRBs of the second part of PRBs to obtain the target DMRS corresponding to the second part of PRBs, and then based on the target DMRS, determining the target channel estimate result.

It can be seen from the above technical solutions that the TBoMS resource carries N transport blocks, and TBoMS resource carrying transport blocks included in the N transport blocks overlaps with the uplink sub-band of the SBFD time-frequency resource, that is, the uplink sub-band of the SBFD time-frequency resource is used as the TBoMS resource; thus, in a case of overlap between the SBFD time-frequency resource and the TBoMS resource, the UE can perform data transmission by making full use of the TBoMS resource, and transmit the uplink data of the TBoMS resource by using the SBFD time-frequency resource (i.e., uplink sub-band) of the downlink slot. In this way, the transmission reliability of the uplink data and the cell coverage radius can be further improved, such that the SBFD time-frequency resource configuration and the TBoMS transmission mechanism can be effectively combined and implemented. From the aspect of entire system, the cell coverage scope can be increased, the transmission delay can be reduced, and the uplink transmission capacity can be increased. Hence, the data transmission of the TDD system can be supported; the resource utilization rate is improved; the network coverage and the network capacity are enhanced; the uplink transmission resource and the cell coverage scope are increased; the uplink transmission delay is diminished; and the uplink transmission capacity is increased.

In combination with examples, the above technical solutions of the present disclosure will be described below.

The frame structure of the TDD can be completed with semi-static configuration and dynamic indication. In a high-level signalling, a plurality of slot format combinations (SFCs) are defined by slot format indicators (SFIs), for example, the base station equipment can select slot formats satisfying service requirements, and add these slot formats to the SFCs. Some of the slot formats can be referred to Table 1, where D represents DL symbol, U represents UL symbol, F represents Flexible symbol. Each SFC is identified with a fixed ID and includes one or more slot format types.

Table 1

| Slot format index | Symbols in slots | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| ... | ... | | | | | | | | | | | | | |
| 55 | D | D | F | F | F | U | U | U | D | D | D | D | D | D |
| 56 - 254 | Reserved | | | | | | | | | | | | | |

(continued)

| Slot format index | Symbols in slots | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 255 | The UE, based on tdd-UL-DL-ConfigurationCommon (uplink and downlink common configuration), tdd-UL-DL-ConfigurationDedicated (uplink and downlink dedicated configuration) and DCI format, determines the slot format. | | | | | | | | | | | | | |

After completing the SFI configuration, the base station equipment sends a plurality of slot format combinations to the UE through a radio resource control (RRC) message. After configuring the plurality of slot format combinations through RRC signalling, the base station equipment notifies an index of the currently-used SFCs to the UE in the form of downlink control information (DCI) format 2_0 through a periodic physical downlink control channel (PDCCH). After receiving the information of the DCI format 2_0 correctly, the UE determines a slot format of each slot in a certain period based on a value of the slot format combination (SFC) index. Hence, the base station equipment and the UE complete configuration on the frame structure based on dynamic indication, and uplink and downlink data transmission can be performed.

The resource assignments can be divided into a time domain resource assignment and a frequency domain resource assignment (with downlink channel resource assignment as an example). The time domain resource assignment: the time domain resource assignment field in the DCI indicates a time domain position of the downlink channel, the field has a total of four bits and the value is from 0 to 15. If the value is m, the m+1 indicates a row index of the time domain resource assignment table, and the information in this row indicates the time domain resource of the physical downlink shared channel (PDSCH). There are two indication manners: one indicates three pieces of information: slot offset between the PDSCH and the PDCCH scheduling the PDSCH, a start symbol of the PDSCH in the slot, and a continued symbol length of the PDSCH; the other indicates slot offset between the PDSCH and the PDCCH scheduling the PDSCH, and a symbol length indicator value (SLIV), and the user equipment can calculate a start symbol and a continued symbol number of the PDSCH based on the SLIV.

The frequency domain resource assignment: the frequency domain resource assignment field in the DCI indicates the frequency domain resource assignment of the downlink channel. The PDSCH frequency domain resource assignments can be divided into Type 0 and Type 1, where Type 0 supports non-continuous resource assignment and obtains frequency diversity gain; Type 1 supports continuous resource assignment and can reduce the number of bits required for the field. DCI format 1_0 only supports Type 1. Type 0: for the non-continuous resource assignment type, one resource block group (RBG) is one virtual resource block (VRB) group consisting of P continuous VRBs, where the number is determined by the high-level parameters such as rbg-Size and bandwidth part (BWP). Under the Type 0 resource assignment type, frequency domain resource assignment as a bitmap, indicates which RBGs are assigned to the downlink channel, where each bit in the bitmap represents one RBG, the highest bit corresponds to the RBG0 and so on. The bit being 1 represents the RBG is assigned to the downlink channel, and the bit being 0 represents that it is not a downlink channel resource. Type 1: the frequency domain resource indication field does not serve as bitmap but indicates one resource indicator value (RIV), and the user equipment calculates a start resource block (RB) of the downlink channel and a number of the occupied RBs based on the RIV.

In the TDD system, the frame structure can be divided into a UL slot, a DL slot and a flexible slot based on slot. The symbols in the flexible slot can be configured as UL symbol, DL symbol and F symbol, where the F symbol is used for UL, DL or guard period (GP). The uplink data can be transmitted in the UL slot, or the UL symbol or F symbol of the flexible slot, but cannot be transmitted in the DL slot, nor in the DL symbol of the flexible slot. Similarly, the downlink data can be transmitted in the DL slot or in the DL symbol or F symbol of the flexible slot but cannot be transmitted in the UL slot nor in the UL symbol of the flexible slot.

Full duplex communication can be implemented by sub-band full duplex (SBFD), that is, the SBFD time-frequency resource can be configured in the time-frequency resource (e.g., UL slot, DL slot, and flexible slot). In this way, at a same moment, data different in direction from other time-frequency resources can be transmitted on the SBFD time-frequency resource. For example, the SBFD time-frequency resource is configured in the DL slot, and the uplink data is transmitted by the SBFD time-frequency resource, such that the uplink data is transmitted in the DL slot. For another example, the SBFD time-frequency resource is configured in the DL symbol of the flexible slot, and the uplink data is transmitted by the SBFD time-frequency resource, such that the uplink data is transmitted in the DL symbol of the flexible slot. For another example, the SBFD time-frequency resource is configured in the UL slot, and the downlink data is transmitted by the SBFD time-frequency resource, such that the downlink data is transmitted in the UL slot. For another example, the SBFD time-frequency resource is configured in the UL symbol of the flexible slot, and the downlink data is transmitted by the SBFD time-frequency resource, such that the downlink data is transmitted in the UL symbol of the flexible slot.

In an example, the SBFD time-frequency resource can be a time-frequency resource corresponding to the SBFD time slot or a time-frequency resource corresponding to the SBFD symbol. The SBFD symbol can be defined as a symbol that the base station equipment and the user equipment can be configured with SBFD sub-band, and on the SBFD sub-bands of these SBFD symbols (called SBFD time-frequency resource), the base station equipment and the user equipment can perform full duplex communication, that is, on the SBFD time-frequency resource, uplink transmission, downlink transmission or simultaneous uplink and downlink transmissions can be performed. The SBFD time-frequency resource can be clearly indicated as uplink, downlink or flexible. When the SBFD time-frequency resource is indicated as flexible, downlink or uplink can be scheduled flexibly on the SBFD time-frequency resource. If the SBFD time-frequency resource is not clearly indicated, it means flexible, and the SBFD time-frequency resource can be used to transmit uplink or downlink data. The configuration of the SBFD slot or SBFD symbol can include: determining which symbols of the DL slot, the UL slot, and the F slot are used for SBFD transmission, and its implementation period and a start point and the like. For ease of descriptions, in subsequent examples, descriptions will be made with the SBFD time-frequency resource as the time-frequency resource corresponding to the SBFD slot.

In an example, the SBFD indicated as uplink is called UL-SBFD (uplink- sub-band full duplex), that is, the SBFD time-frequency resource is used for uplink; the SBFD indicated as downlink is called DL-SBFD (downlink-sub-band full duplex), that is, the SBFD time-frequency resource is used for downlink. In order to support full duplex (FD) communication, the SBFD time-frequency resource can be configured semi-statically, for example, configured semi-statically by radio resource control (RRC) signalling. Further, the SBFD time-frequency resource can also be configured dynamically, for example, configured dynamically by downlink control information (DCI).

The SBFD time-frequency resource can be configured in the DL symbol, F symbol and UL symbol. The symbols configured with the SBFD time-frequency resource are called SBFD symbols, and other symbols not configured with the SBFD time-frequency resource are called ordinary symbols, that is, the non-SBFD symbols are called ordinary symbols, for example, the UL symbol, DL symbol and F symbol and the like. The SBFD can be configured in some symbols of a slot, that is, some symbols of one slot are SBFD symbols and others are ordinary symbols, such that the transmission of DL or UL data can be across ordinary symbols or SBFD symbols.

In an example, the TBoMS resource can carry a plurality of transport blocks. When the TBoMS resource carrying the plurality of transport blocks overlaps with the SBFD time-frequency resource, a TBoMS resource assignment method, a method of UE sending the uplink data based on the TBoMS resource, and a channel joint estimate method between orthogonal frequency division multiplexing (OFDM) symbols or slots are provided.

Descriptions can be made below on the TBoMS resource assignment method, the method of UE sending the uplink data based on the TBoMS resource, and the channel joint estimate method between OFDM symbols or slots in combination with specific situations.

First, the TBoMS resource assignment method is described below.

The base station equipment can assign the TBoMS resource to the UE. The TBoMS resource can carry N transport blocks, where N is a positive integer greater than 1, for example, 2, 3, 4, 6, 8 or the like, which is not limited herein. In subsequent process, a total number N of transport blocks in the TBoMS resource being 4 is taken as an example.

In an example, the TBoMS resource carrying only first-type transport blocks included in the N transport blocks can overlap with the uplink sub-band (the SBFD time-frequency resource is indicated for using in uplink) of the SBFD time-frequency resource, and the SBFD time-frequency resource can be in the downlink slot or flexible slot. As shown in FIG. 2A, the TBoMS resource carrying N first-type transport blocks overlaps with the uplink (UL) sub-band of the SBFD time-frequency resource of the downlink slot (D). As shown in FIG. 2B, the TBoMS resource carrying N first-type transport blocks overlaps with the uplink sub-band of the SBFD time-frequency resource of the flexible slot (F).

As shown in FIG. 2A, slot 3, slot 4, slot 5 and slot 6 are all downlink slots, and these downlink slots are all configured with the SBFD time-frequency resource. Further, the SBFD time-frequency resource is indicated for using in uplink, and that is, used as the UL sub-band. The TBoMS resource can carry four transport blocks (that is, UL1), and the TBoMS resource carrying all the four transport blocks is in the uplink sub-band of the SBFD time-frequency resource.

As shown in FIG. 2B, slot 3, slot 4, slot 5 and slot 6 are all flexible slots and these flexible slots are all configured with the SBFD time-frequency resource. Further, the SBFD time-frequency resource is indicated for using in uplink, that is, used as the UL sub-band. The TBoMS resource can carry four transport blocks (UL1), and the TBoMS resource carrying all the four transport blocks is in the uplink sub-band of the SBFD time-frequency resource.

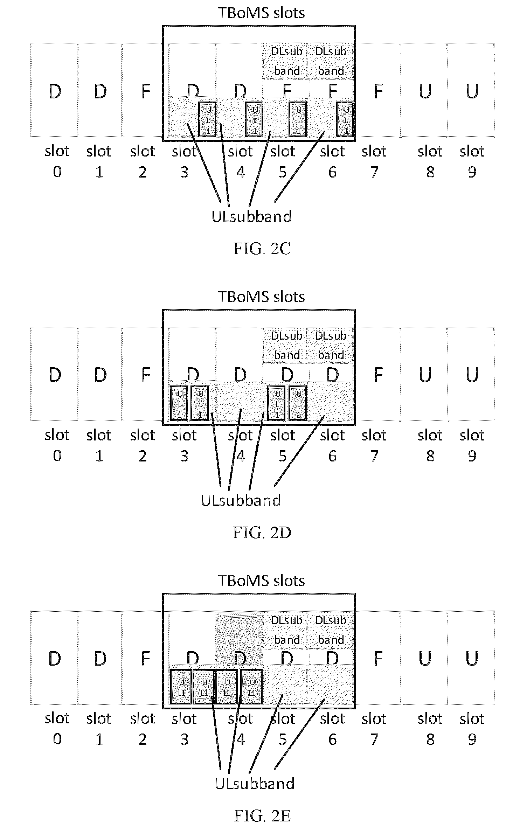

In some embodiments, the SBFD time-frequency resource can also be configured in the downlink slot and flexible slot. As shown in FIG. 2C, slot 3 and slot 4 are downlink slots, and slot 5 and slot 6 are flexible slots, and these slots are all configured with the SBFD time-frequency resource. Further, the SBFD time-frequency resource is indicated for using in uplink. The TBoMS resource can carry four transport blocks, and the TBoMS resource carrying all the four transport blocks is in the uplink sub-band of the SBFD time-frequency resource.

N transport blocks can occupy non-continuous symbols in N slots. As shown in FIG. 2A, FIG. 2B and FIG. 2C, the first transport block occupies the slot 3, the second transport block occupies the slot 4, the third transport block occupies the slot 5, and the fourth transport block occupies the slot 6. Apparently, these transport blocks occupy non-continuous symbols in the four slots, that is, each transport block occupies at least one symbol in one slot.

N transport blocks can also occupy non-continuous symbols in A slots, where A is a positive integer less than N. For example, as shown in FIG. 2D, the first transport block and the second transport block occupy the slot 3, the third transport block and the fourth transport block occupy the slot 5. Apparently, these transport blocks occupy non-continuous symbols in two slots.

N transport blocks can also occupy continuous symbols in B slots, where B is a positive integer less than N. For example, as shown in FIG. 2E, the first transport block and the second transport block occupy the slot 3, and the third transport block and the fourth transport block occupy the slot 4. These transport blocks occupy continuous symbols in two slots.

For the slots configured with the uplink sub-band of the SBFD time-frequency resource, for example, the slots 3 to 6, they can also be configured with the downlink sub-band (DL sub-band) of the SBFD time-frequency resource or not configured with the downlink sub-band of the SBFD time-frequency resource. As shown in FIG. 2A to FIG. 2E, the slot 5 and slot 6 are configured with the downlink sub-band of the SBFD time-frequency resource, and the slot 3 and slot 4 are not configured with the downlink sub-band of the SBFD time-frequency resource.

If the TBoMS resource carrying only first-type transport blocks included in N transport blocks overlaps with the uplink sub-band of the SBFD time-frequency resource, the base station equipment can send a resource configuration message to the UE, and the UE receives a resource configuration message from the base station equipment. The resource configuration message includes configuration information of the first-type transport blocks. As shown in FIG. 2A to FIG. 2E, the resource configuration message is configured to indicate the configuration information of the four transport blocks, and represent the resource occupied by the four transport blocks, so as to enable the UE to know which resources are used for the TBoMS resource. The resource configuration message can be a dynamic resource configuration message or a semi-static resource configuration message.

In an example, the TBoMS resource carrying first-type transport blocks included in N transport blocks can overlap with the uplink sub-band of the SBFD time-frequency resource (the SBFD time-frequency resource is indicated for use in uplink) and the second-type transport blocks in the uplink slot, and the SBFD time-frequency resource can be in the downlink slot or flexible slot.

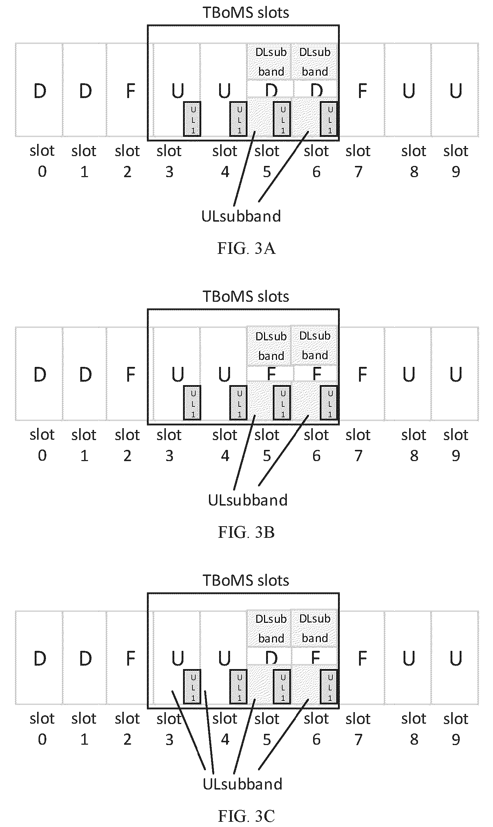

With reference to FIG. 3A, the TBoMS resource carrying two first-type transport blocks overlaps with the uplink sub-band (UL sub-band) of the SBFD time-frequency resource of the downlink slot (D), and the TBoMS resource carrying the other two second-type transport blocks is in the uplink slot (U). With reference to FIG. 3B, the TBoMS resource carrying two first-type transport blocks overlaps with the uplink sub-band of the SBFD time-frequency resource of the flexible slot (F), and the TBoMS resource carrying the other two second-type transport blocks is in the uplink slot.

With reference to FIG. 3A, the slot 3 and the slot 4 are uplink slots, the slot 5 and the slot 6 are downlink slots. The slot 5 and the slot 6 are configured with the SBFD time-frequency resource, and the SBFD time-frequency is indicated for use in uplink, that is, used as the uplink sub-band. Based on this, the TBoMS resource can carry four transport blocks (UL1), the TBoMS resource carrying two transport blocks of which is in the uplink slot and the TBoMS resource carrying the other two transport blocks is in the uplink sub-band of the SBFD time-frequency resource.

With reference to FIG. 3B, the slot 3 and the slot 4 are uplink slots, the slot 5 and the slot 6 are flexible slots. The slot 5 and the slot 6 are configured with the SBFD time-frequency resource, and the SBFD time-frequency is indicated for use in uplink, that is, used as the uplink sub-band. Based on this, the TBoMS resource can carry four transport blocks, the TBoMS resource carrying two transport blocks of which is in the uplink slot and the TBoMS resource carrying the other two transport blocks is in the uplink sub-band of the SBFD time-frequency resource.

In some embodiments, the SBFD time-frequency resource can also be configured in the downlink slot and the flexible slot. With reference to FIG. 3C, the slot 3 and the slot 4 are uplink slots, the slot 5 is a downlink slot, and the slot 6 is a flexible slot. The slot 5 and the slot 6 are configured with the SBFD time-frequency resource, and the SBFD time-frequency resource is indicated for use in uplink. The TBoMS resource carrying two transport blocks of them is in the uplink slot, and the TBoMS resource carrying the other two transport blocks is in the uplink sub-band of the SBFD time-frequency resource.

N transport blocks can occupy non-continuous symbols in N slots. With reference to FIG. 3A, FIG. 3B and FIG. 3C, the TBoMS resource can carry four transport blocks, and the TBoMS resource carrying the four transport blocks occupy non-continuous symbols in four slots, that is, each transport block occupies at least one symbol in one slot.

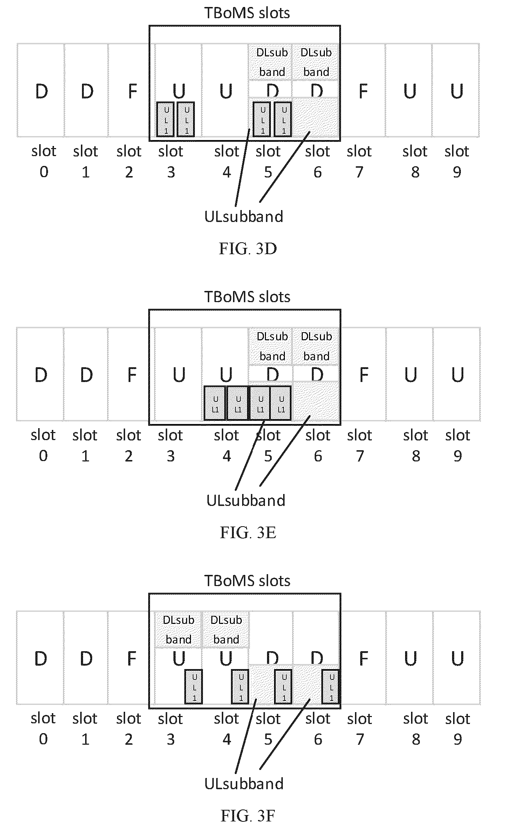

N transport blocks can also occupy non-continuous symbols in A slots, where A is a positive integer less than N. For example, with reference to FIG. 3D, the first transport block and the second transport block occupy the slot 3, and the third transport block and the fourth transport block occupy the slot 5. Apparently, these transport blocks occupy non-continuous symbols in two slots.

N transport blocks can also occupy continuous symbols in B slots, where B is a positive integer less than N. For example, with reference to FIG. 3E, the first transport block and the second transport block occupy the slot 4, and the third transport block and the fourth transport block occupy the slot 5. These transport blocks occupy continuous symbols in two slots.

For the slots configured with the uplink sub-band of the SBFD time-frequency resource, for example, the slot 5 and slot 6, they may also be configured with the downlink sub-band (DL sub-band) of the SBFD time-frequency resource, or not configured with the downlink sub-band of the SBFD time-frequency resource. In FIG. 3A to FIG. 3E, the configuration of the downlink sub-band of the SBFD time-frequency resource is taken as example.

For the uplink slots where the second-type transport blocks are located, for example, the slot 3 and the slot 4, they may also be configured with the downlink sub-band (DL sub-band) of the SBFD time-frequency resource, or not configured with the downlink sub-band of the SBFD time-frequency resource. In FIGS. 3A to 3E, for example, downlink sub-band of the SBFD time-frequency resource is not configured. With reference to FIG. 3F, it is a schematic diagram of configuring the downlink sub-band of the SBFD time-frequency resource in the uplink slot.

If the TBoMS resource carrying first-type transport blocks included in N transport blocks overlaps with the uplink sub-band of the SBFD time-frequency resource and the second-type transport blocks in the uplink slot, the base station equipment can send one resource configuration message to the UE, and the UE receives the one resource configuration message. The one resource configuration message includes configuration information of the second-type transport blocks and configuration information of the first-type transport blocks. With reference to FIG. 3A to FIG. 3F, the resource configuration message is configured to indicate the configuration information of the four transport blocks to enable the UE to know which resources are used for the TBoMS resource. The resource configuration message can be a dynamic resource configuration message or a semi-static resource configuration message.

Alternatively, the base station equipment can send a first resource configuration message and a second resource configuration message to the UE, and the UE receives the first resource configuration message and the second resource configuration message. The first resource configuration message includes the configuration information of the second-type transport blocks, and is used to indicate the configuration information of the first transport block and the configuration information of the second transport block; and the second resource configuration message includes the configuration information of the first-type transport blocks, and is used to indicate the configuration information of the third transport block and the configuration information of the fourth transport block. Thus, the UE can, based on the first resource configuration message and the second resource configuration message, know which resources are used for the TBoMS resource. The first resource configuration message can be a dynamic resource configuration message or a semi-static resource configuration message, and the second resource configuration message can be a dynamic resource configuration message or a semi-static resource configuration message.

In an example, after receiving the resource configuration message, the UE can obtain the configuration information of the TBoMS resource from the resource configuration message, and based on the configuration information of the TBoMS resource, determine the TBoMS resource, where the TBoMS resource carries N transport blocks. With reference to FIG. 2A to FIG. 2E, the N transport blocks are N first-type transport blocks, and with reference to FIG. 3A to FIG. 3F, the N transport blocks include the first-type transport blocks and the second-type transport blocks.

After determining the TBoMS resource, the UE can, based on the TBoMS resource, send uplink data to the base station equipment, and the base station equipment can receive the uplink data sent by the UE based on the TBoMS resource.

Second, the method of UE sending the uplink data based on the TBoMS resource is described below.

In an example, when the TBoMS resource overlaps with the SBFD time-frequency resource, the UE can, based on the resource overlap between the TBoMS resource and the SBFD time-frequency resource, determine a target transport block bit number carried by the TBoMS resource (i.e., actual transmission bit number), and based on the TBoMS resource, send uplink data matching the target transport block bit number to the base station equipment, then, the base station equipment receives the uplink data matching the target transport block bit number. For example, a target number of target physical resource blocks (PRB) is determined based on the resource overlap, where the target PRBs are PRBs in the TBoMS resource and in the uplink sub-band of the SBFD time-frequency resource. For example, based on the configuration information of the TBoMS resource and the configuration information of the SBFD time-frequency resource, the UE can know which PRBs are in the TBoMS resource, and which PRBs are in the uplink sub-band of the SBFD time-frequency resource, and which PRBs are outside the uplink sub-band of the SBFD time-frequency resource. In this way, the target number of the target PRBs can be determined based on the resource overlap. Then, based on the target number of the target PRBs and the bit number transmitted per PRB, the target transport block bit number carried by the TBoMS resource is determined.

For example, if the TBoMS resource includes the first-type transport blocks, PRBs in the uplink sub-band of the SBFD time-frequency resource in the first-type transport blocks (denoted as a first part of PRBs) are determined, and the target PRBs include the first part of PRBs in the first-type transport blocks. If the TBoMS resource includes the second-type transport blocks, when the TBoMS resource carrying the second-type transport blocks does not overlap with the downlink sub-band of the SBFD time-frequency resource, the target PRBs include all PRBs in the second-type transport blocks; if the TBoMS resource carrying the second-type transport blocks overlaps with the downlink sub-band of the SBFD time-frequency resource, PRBs outside the downlink sub-band of the SBFD time-frequency resource in the second-type transport blocks are determined, and the target PRBs include this part of PRBs in the second-type transport blocks.

Obviously, the number of the PRBs being the target PRBs in each transport block is determined, and then a sum of the numbers of these PRBs is taken as the target number of the target PRBs.

Determining the target transport block bit number carried by the TBoMS resource can include the following cases.

Case 1: the TBoMS resource carrying all the first-type transport blocks is in the uplink sub-band (UL sub-band) of the SBFD time-frequency resource, that is, all resources of the TBoMS resource are valid resources. Thus, based on the total number N of the transport blocks and the number of the PRBs occupied by the transport blocks, the target number of the target PRBs is determined.

For example, the target transport block bit number can be determined in the following formula (1):

$$N_{RE}=N*min(156,N_{RE}')*n_{PRB} \qquad (1) .$$

In the formula (1), $N_{RE}$ represents the target transport block bit number, $N$ represents the total number of the transport blocks, $n_{PRB}$ represents the number of the PRBs occupied by the transport blocks, i.e., the number of the PRBs occupied per transport block, namely, a number of physical layer resource blocks assigned by the base station equipment to the UE, and $N*n_{PRB}$ refers to the target number of the target PRBs.

$min(156,N_{RE}')$ represents a bit number transmitted per PRB, i.e., a data volume of this bit number carried by one PRB, where 156 represents a maximum bit number carried per PRB, which is an empirical value; $N_{RE}'$ refers to a possible bit number carried per PRB, which is related to the data transmission process of the UE, and not limited herein.

With reference to FIG. 2A and FIG. 2B, four first-type transport blocks are all in the uplink sub-band of the SBFD time-frequency resource. Thus, the target number of the target PRBs is $4*n_{PRB}$. With reference to FIG. 3A and FIG. 3B, the TBoMS resource carrying two first-type transport blocks is in the uplink sub-band of the SBFD time-frequency resource, and the TBoMS resource carrying two second-type transport blocks is in the uplink slot. Hence, the target number of the target PRBs is $2*n_{PRB}+2*n_{PRB}$, i.e., $4*n_{PRB}$. In one word, the target number of the target PRBs can be determined based on the total number N of the transport blocks and the number of the PRBs occupied by the transport blocks.

Case 2: the first part of PRBs of the TBoMS resource carrying the first-type transport blocks is in the uplink sub-band of the SBFD time-frequency resource, and the second part of PRBs of the first-type transport blocks is outside the uplink sub-band of the SBFD time-frequency resource, that is, a part of resource (e.g., the second part of PRBs) of the TBoMS resource is invalid resource. Therefore, based on the total number $N$ of the transport blocks, the number of the PRBs occupied by the transport blocks, the number of the first-type transport blocks, and the number of the PRBs occupied by the second part of PRBs, the target number of the target PRBs can be determined.

For example, the target transport block bit number can be determined in the formula (2):

$$N_{RE}=N*min(156,N_{RE}')*n_{PRB}-M*min(156,N_{RE}')*m_{PRB} \qquad (2).$$

In the formula (2), $N_{RE}$ represents the target transport block bit number, $N$ represents the total number of the transport blocks, $n_{PRB}$ represents the number of the PRBs occupied by the transport blocks, i.e., the number of the PRBs occupied per transport block, $M$ represents the number of the first-type transport blocks, $m_{PRB}$ represents the number of the PRBs occupied by the second part of PRBs of the first-type transport blocks, where a sum of the number of the PRBs occupied by the second part of PRBs of the first-type transport blocks and the number of the PRBs occupied by the first part of PRBs of the first-type transport blocks can be $n_{PRB}$, $m_{PRB}$ represents the number of the PRBs outside the uplink sub-band of the SBFD time-frequency resource. Obviously, $N*n_{PRB}-M*m_{PRB}$ is the target number of the target PRBs. $min(156,N_{RE}')$ represents a bit number transmitted per PRB, that is, a data volume of this bit number carried by one PRB.

In the formula (2), in order to determine the available PRB resource and the carried transport block (TB) bit number, it is obtained by subtracting the bit number $(M*min(156,N_{RE}')*m_{PRB})$ corresponding to the unavailable PRB number $(M*m_{PRB})$ from the bit number $(N*min(156,N_{RE}')*n_{PRB})$ corresponding to the total number of PRBs $(N*n_{PRB})$.

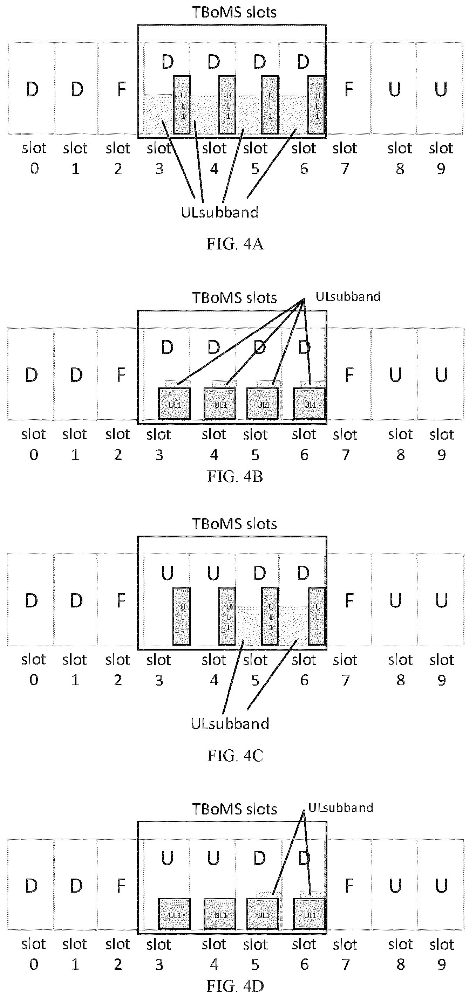

FIG. 4A is a schematic diagram illustrating the frequency domain resource of the first-type transport blocks going beyond the uplink sub-band of the SBFD time-frequency resource. FIG. 4B is a schematic diagram illustrating the time domain resource of the first-type transport blocks going beyond the uplink sub-band of the SBFD time-frequency resource. In some embodiments, both the time domain resource of the first-type transport blocks and the frequency domain resource of the first-type transport blocks can go beyond the uplink sub-band of the SBFD time-frequency resource, which is not specifically illustrated.

With reference to FIG. 4A and FIG. 4B, the PRBs in the uplink sub-band of the SBFD time-frequency resource are called the first part of PRBs, and the PRBs outside the uplink sub-band of the SBFD time-frequency resource are called the second part of PRBs; the total number $N$ of the transport blocks is 4, and the number $M$ of the first-type transport blocks is 4.

Thus, the target number of the target PRBs is $4*n_{PRB}-4*m_{PRB}$, where $m_{PRB}$ represents the number of the PRBs occupied by the second part of PRBs.

The TBoMS resource carrying two first-type transport blocks is in the uplink sub-band of the SBFD time-frequency resource, and the TBoMS resource carrying two second-type transport blocks is in the uplink slot, with reference to FIG. 4C, it is a schematic diagram illustrating the frequency domain resource of the first-type transport blocks going beyond the uplink sub-band of the SBFD time-frequency resource, with reference to FIG. 4D, it is a schematic diagram illustrating the time domain resource of the first-type transport blocks going beyond the uplink sub-band of the SBFD time-frequency resource. In some embodiments, both the time domain resource of the first-type transport blocks and the frequency domain resource of the first-type transport blocks can go beyond the uplink sub-band of the SBFD time-frequency resource.

With reference to FIG. 4C and FIG. 4D, all resources of the second-type transport blocks are valid resources; the first-type transport blocks include the first part of PRBs and the second part of PRBs, where the first part of PRBs is valid resource and the second part of PRBs is invalid resource; the total number $N$ of the transport blocks is 4, and the number $M$ of the first-type transport blocks is 2. The target number of the target PRBs is $4*n_{PRB}-2*m_{PRB}$, where $m_{PRB}$ represents the number of the PRBs occupied by the second part of PRBs.

Case 3: the first part of PRBs of the TBoMS resource carrying the first-type transport blocks is in the uplink sub-band of the SBFD time-frequency resource, and the second part of PRBs of the first-type transport blocks is outside the uplink sub-band of the SBFD time-frequency resource, that is, a part of resource (e.g., the second part of PRBs) of the TBoMS resource is invalid resource. Therefore, based on the number of the second-type transport blocks, the number of the PRBs occupied by the transport blocks, the number of the first-type transport blocks, and the number of the PRBs occupied by the first part of PRBs, the target number of the target PRBs can be determined.

For example, the target transport block bit number can be determined in the formula (3):

$$N_{RE}=K*min(156,N_{RE}')*n_{PRB}+L*min(156,N_{RE}')*l_{PRB} \quad (3).$$

In the formula (3), $N_{RE}$ represents the target transport block bit number, $K$ represents the number of the second-type transport blocks, $n_{PRB}$ represents the number of the PRBs occupied by the transport blocks (i.e., the number of the PRBs occupied by the second-type transport blocks), $L$ represents the number of the first-type transport blocks, $l_{PRB}$ represents the number of the PRBs occupied by the first part of PRBs of the first-type transport blocks, $l_{PRB}$ represents the number of the PRBs in the uplink sub-band of the SBFD time-frequency resource. Obviously, $K*n_{PRB}+L*l_{PRB}$ represents the target number of the target PRBs, and $K+L$ represents the total number $N$ of the transport blocks. $min(156,N_{RE}')$ represents the bit number transmitted per PRB, that is, the data volume of this bit number carried by one PRB.

In the formula (3), in order to determine the available PRB resource and the carried transport block bit number, it is obtained by adding the bit number ($K*min(156,N_{RE}')*n_{PRB}$) corresponding to the total number of PRBs of the uplink slot ($K*n_{PRB}$) to the bit number ($L*min(156,N_{RE}')*l_{PRB}$) corresponding to the total number of PRBs of the downlink slot or F slot ($L*l_{PRB}$).

With reference to FIG. 4A and FIG. 4B, the total number $N$ of the transport blocks is 4, the number $M$ of the first-type transport blocks is 4, and the number $K$ of the second-type transport blocks is 0. Hence, the target number of the target PRBs is $0*n_{PRB}+4*l_{PRB}$, where $l_{PRB}$ represents the number of the PRBs occupied by the first part of PRBs of the first-type transport blocks. With reference to FIG. 4C and FIG. 4D, the total number N of the transport blocks is 4, the number $M$ of the first-type transport blocks is 2, and the number $K$ of the second-type transport blocks is 2. Hence, the target number of the target PRBs is $2*n_{PRB}+2*l_{PRB}$, where $n_{PRB}$ represents the number of the PRBs occupied by the second-type transport blocks, and $l_{PRB}$ represents the number of the PRBs occupied by the first part of PRBs of the first-type transport blocks.

Case 4: the first part of PRBs of the TBoMS resource carrying the first-type transport blocks is in the uplink sub-band of the SBFD time-frequency resource, the second part of PRBs of the first-type transport blocks is outside the uplink sub-band of the SBFD time-frequency resource, a third part of PRBs of the TBoMS resource carrying the second-type transport blocks is in a downlink sub-band or guard sub-band of the SBFD time-frequency resource of the uplink slot, and a fourth part of PRBs of the TBoMS resource carrying the second-type transport blocks is in a non-SBFD time-frequency resource of the uplink slot, that is, a part of the TBoMS resource (e.g., the second part of PRBs and the third part of PRBs) is invalid resource. Therefore, based on the total number N of the transport blocks, the number of the PRBs occupied by the transport blocks, the number of the first-type transport blocks, the number of the PRBs occupied by the second part of PRBs, the number of the second-type transport blocks, and the number of the PRBs occupied by the third part of PRBs, the target number of the target PRBs is determined.

For example, the target transport block bit number can be determined in the following formula (4):

$$N_{RE}=N*min(156,N_{RE}')*n_{PRB}-M*min(156,N_{RE}')*m_{PRB}-P*min(156,N_{RE}')*p_{PRB} \quad (4).$$

In the formula (4), $N_{RE}$ represents the target transport block bit number, $N$ represents the total number of the transport blocks, $n_{PRB}$ represents the number of the PRBs occupied by the transport blocks, i.e., the number of PRBs occupied per transport block, $M$ represents the number of the first-type transport blocks, $m_{PRB}$ represents the number of the PRBs occupied by the second part of PRBs of the first-type transport blocks, $P$ represents the number of the second-type transport blocks, $p_{PRB}$ represents the number of the PRBs occupied by the third part of PRBs of the second-type transport blocks. Obviously, the target number of the target PRBs is $N*n_{PRB}-M*m_{PRB}-P*p_{PRB}$, and $min(156,N_{RE}')$ represents the bit number transmitted per PRB, i.e., the data volume of this bit number carried by one PRB.

In order to determine the available PRB resource and the carried transport block bit number, it is obtained by subtracting the bit number corresponding to the unavailable PRB number ($M*m_{PRB}+P*p_{PRB}$) from the bit number corresponding to the total number of PRBs ($N*n_{PRB}$).

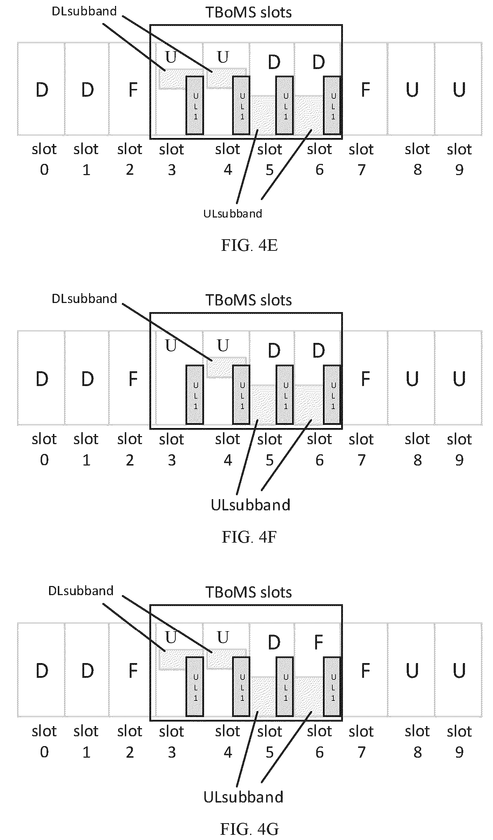

The TBoMS resource carrying two first-type transport blocks is in the uplink sub-band of the SBFD time-frequency resource, and the TBoMS resource carrying two second-type transport blocks is in the uplink slot, and further, a part of the TBoMS resource carrying the two second-type transport blocks is in the downlink sub-band or guard sub-band of the SBFD time-frequency resource of the uplink slot, with reference to FIG. 4E, it is a schematic diagram illustrating the frequency domain resource of the first-type transport block going beyond the uplink sub-band of the SBFD time-frequency resource. In some embodiments, the time domain resource of the first-type transport blocks can also go beyond the uplink sub-band of the SBFD time-frequency resource, which is not limited herein.

With reference to FIG. 4E, the second-type transport blocks include a third part of PRBs and a fourth part of PRBs, and the first-type transport blocks include a first part of PRBs and a second part of PRBs, where the third part of PRBs is invalid resource, the fourth part of PRBs is valid resource, the first part of PRBs is valid resource, and the second part of PRBs is invalid resource. The total number $N$ of the transport blocks is 4, the number $M$ of the first-type transport blocks is 2, and the number $P$ of the second-type transport blocks is 2. The invalid resource of the first-type transport blocks is the second part of PRBs, and the number of the PRBs occupied by the second part of PRBs is $m_{PRB}$; the invalid resource of the second-type transport blocks is the third part of PRBs, and the number of the PRBs occupied by the third part of PRBs is $p_{PRB}$. Thus, the target number of the target PRBs is $4*n_{PRB}-2*m_{PRB}-2*p_{PRB}$.

Case 5: the first part of PRBs of the TBoMS resource carrying the first-type transport blocks is in the uplink sub-band of the SBFD time-frequency resource, the second part of PRBs of the first-type transport blocks is outside the uplink sub-band of the SBFD time-frequency resource, the third part of PRBs of the TBoMS resource carrying the second-type transport blocks is in the downlink sub-band or guard sub-band of the SBFD time-frequency resource of the uplink slot, and the fourth part of PRBs of the TBoMS resource carrying the second-type transport blocks is in the non-SBFD time-frequency resource of the uplink slot, that is, a part of the TBoMS resource (the second part of PRBs and the third part of PRBs) is invalid resource, and a part of resource (the first part of PRBs and the fourth part of PRBs) is valid resource. Therefore, based on the number of the first-type transport blocks, the number of the PRBs occupied by the first part of PRBs, the number of the second-type transport blocks, and the number of the PRBs occupied by the fourth part of PRBs, the target number of the target PRBs is determined.

For example, the target transport block bit number is determined in the following formula (5):

$$N_{RE}=L*min(156,N_{RE}')*l_{PRB}+P*min(156,N_{RE}')*p_{PRB} \quad (5).$$

In the formula (5), $N_{RE}$ represents the target transport block bit number, $L$ represents the number of the first-type transport blocks, $l_{PRB}$ represents the number of the PRBs occupied by the first part of PRBs of the first-type transport blocks, $P$ represents the number of the second-type transport blocks, $p_{PRB}$ represents the number of the PRBs occupied by the fourth part of PRBs of the second-type transport blocks. Obviously, $L*l_{PRB}+P*p_{PRB}$ is the target number of the target PRBs. $min(156,N_{RE}')$ represents the bit number transmitted per PRB, i.e., the data volume of this bit number carried by one PRB. In order to determine the available PRB resource and the carried transport block bit number, it is obtained by adding the bit number corresponding to the total number of PRBs ($P*p_{PRB}$) of the uplink slot to the bit number corresponding to the total number of PRBs ($L*l_{PRB}$) of the downlink slot or F slot.

The TBoMS resource carrying two first-type transport blocks is in the uplink sub-band of the SBFD time-frequency resource, and the TBoMS resource carrying two second-type transport blocks is in the uplink slot, and further, a part of the TBoMS resource carrying the two second-type transport blocks is in the downlink sub-band or guard sub-band of the SBFD time-frequency resource of the uplink slot. With reference to FIG. 4E, the second-type transport blocks include a third part of PRBs and a fourth part of PRBs, where the fourth part of PRBs is valid resource; the first-type transport blocks include a first part of PRBs and a second part of PRBs, where the first part of PRBs is valid resource. The total number $N$ of the transport blocks is 4, where the number $L$ of the first-type transport blocks is 2 and the number $P$ of the second-type transport blocks is 2. The number of the PRBs occupied by the valid resource (the first part of PRBs) of the first-type transport blocks is $l_{PRB}$, and the number of the PRBs occupied by the valid resource (the fourth part of PRBs) of the second-type transport blocks is $p_{PRB}$. Thus, the target number of the target PRBs is $2^*l_{PRB}+2^*p_{PRB}$.

In an example, if the third part of PRBs of a part of the TBoMS resource carrying the second-type transport blocks is in the downlink sub-band or guard sub-band of the SBFD time-frequency resource of the uplink slot, and a part of the second-type transport blocks is only in the uplink slot (i.e., not in the downlink sub-band or guard sub-band), the target transport block bit number can be determined in the following formula (6), where the formula (6) is a variation formula of the formula (5) and has the similar implementation principle.

$$N_{RE}=L^*min(156,N_{RE}')^*l_{PRB}+P^*min(156,N_{RE}')^*p_{PRB}+K^*min(156,N_{RE}')^*n_{PRB} \text{ (6)}.$$

In the formula (6), $N_{RE}$ represents the target transport block bit number, $L$ represents the number of the first-type transport blocks, $l_{PRB}$ represents the number of the PRBs occupied by the first part of PRBs of the first-type transport blocks, $P$ represents the number of the second-type transport blocks in the downlink sub-band or guard sub-band of the SBFD time-frequency resource of the uplink slot, $p_{PRB}$ represents the number of the PRBs occupied by the fourth part of PRBs of the second-type transport blocks, $K$ represents the number of the second-type transport blocks only in the uplink slot, $n_{PRB}$ represents the number of the PRBs occupied by the second-type transport blocks (i.e., the number of the PRBs occupied per transport block). Obviously, $L^*l_{PRB}+P^*p_{PRB}+K^*n_{PRB}$ represents the target number of the target PRBs.

The TBoMS resource carrying two first-type transport blocks is in the uplink sub-band of the SBFD time-frequency resource, the TBoMS resource carrying one second-type transport block is in the uplink slot, and a part of the TBoMS resource carrying this second-type transport block is in the downlink sub-band or guard sub-band of the SBFD time-frequency resource of the uplink slot, and the other second-type transport block is only in the uplink slot. With reference to FIG. 4F, one second-type transport block includes a third part of PRBs and a fourth part of PRBs, where the fourth part of PRBs is valid resource, and the other second-type transport block is valid resource; the first-type transport blocks include a first part of PRBs and a second part of PRBs, where the first part of PRB is valid resource. The total number $N$ of the transport blocks is 4. The number $L$ of the first-type transport blocks is 2. The number $P$ of the second-type transport blocks in the downlink sub-band or guard sub-band of the SBFD time-frequency resource of the uplink slot is 1, and the number $K$ of the second-type transport blocks only in the uplink slot is 1. The number of the PRBs occupied by the first part of PRBs of the first-type transport blocks is $l_{PRB}$, the number of the PRBs occupied by the fourth part of PRBs of one second-type transport block is $p_{PRB}$, and the number of the PRBs occupied by the other second-type transport block is $n_{PRB}$. Thus, the target number of the target PRBs is $2^*l_{PRB}+1^*p_{PRB}+1^*n_{PRB}$.

Case 6: the first-type transport blocks in the uplink sub-band of the SBFD time-frequency resource can be distinguished as follows: a first-type transport block in the downlink slot, and a first-type transport block in the F slot. Other contents can be referred to Case 4. Therefore, the target transport block bit number can be determined in the formula (7):

$$N_{RE}=N^*min(156,N_{RE}')^*n_{PRB}-M^*min(156,N_{RE}')^*m_{PRB}-P^*min(156,N_{RE}')^*p_{PRB}-Z^*min(156,N_{RE}')^*z_{PRB} \tag{7}.$$

In the above formula, $N_{RE}$ represents the target transport block bit number, $N$ represents the total number of the transport blocks, $n_{PRB}$ represents the number of the PRBs occupied by the transport blocks, $M$ represents the number of the first-type transport blocks in the downlink slot, $m_{PRB}$ represents the number of the PRBs occupied by the second part of PRBs of the first-type transport blocks in the downlink slot, $P$ represents the number of the second-type transport blocks, $p_{PRB}$ represents the number of the PRBs occupied by the third part of PRBs of the second-type transport blocks, $Z$ represents the number of the first-type transport blocks in the F slot, and $z_{PRB}$ represents the number of the PRBs occupied by the second part of PRBs of the first-type transport blocks in the F slot. $N^*n_{PRB}-M^*m_{PRB}-P^*p_{PRB}-Z^*z_{PRB}$ represents the target number of the target PRBs.

As shown in FIG. 4G, the total number N of the transport blocks is 4, the number of the PRBs occupied by the transport blocks is $n_{PRB}$, the number M of the first-type transport blocks in the downlink slot is 1, the number of the PRBs occupied by the second part of PRBs of the first-type transport block in the downlink slot is $m_{PRB}$, the number $P$ of the second-type transport blocks is 2, the number of the PRBs occupied by the third part of PRBs of the second-type transport blocks is $p_{PRB}$, the number $Z$ of the first-type transport blocks in the F slot is 1, and the number of the PRBs occupied by the second part of PRBs of the first-type transport blocks in the F slot is $z_{PRB}$.

Case 7: the first-type transport blocks in the uplink sub-band of the SBFD time-frequency resource can be distinguished as follows: a first-type transport block in the downlink slot, and a first-type transport block in the F slot. Other contents can be referred to Case 5. Therefore, the target transport block bit number can be determined in the formula (8):

$$N_{RE}=L*min(156,N_{RE}')*l_{PRB}+P*min(156,N_{RE}')*p_{PRB} +Z*min(156,N_{RE}')*z_{PRB} \text{ (8)}.$$

In the formula (8), $N_{RE}$ represents the target transport block bit number, $L$ represents the number of the first-type transport blocks in the downlink slot, $l_{PRB}$ represents the number of the PRBs occupied by the first part of PRBs of the first-type transport blocks in the downlink slot, $P$ represents the number of the second-type transport blocks, $p_{PRB}$ represents the number of the PRBs occupied by the fourth part of PRBs of the second-type transport blocks, $Z$ represents the number of the first-type transport blocks in the F slot, $z_{PRB}$ represents the number of the PRBs occupied by the first part of PRBs of the first-type transport blocks in the F slot. Obviously, $L*l_{PRB}+P*p_{PRB} +Z*z_{PRB}$ represents the target number of the target PRBs.

As shown in FIG. 4G, the total number N of the transport blocks is 4, the number $L$ of the first-type transport blocks in the downlink slot can be 1, the number of the PRBs occupied by the first part of PRBs of the first-type transport block in the downlink slot can be $l_{PRB}$, the number $P$ of the second-type transport blocks can be 2, the number of the PRBs occupied by the fourth part of PRBs of the second-type transport block can be $p_{PRB}$, the number $Z$ of the first-type transport blocks in the F slot can be 1, and the number of the PRBs occupied by the first part of PRBs of the first-type transport blocks in the F slot can be $z_{PRB}$.

In an example, if a part of the second-type transport blocks is only in the uplink slot, the target transport block bit number can be determined in the following formula (9), which is a variation formula of the formula (8).

$$N_{RE}L*min(156,N_{RE}').1_{PRB}+P*min(156,N_{RE}')*p_{PRB}+K*min(156,N_{RE}')*n_{PRB}+Z*min(156,N_{RE}')*z_{PRB} \qquad (9).$$

In the formula (9), $N_{RE}$ represents the target transport block bit number, $L$ represents the number of the first-type transport blocks in the downlink slot, $l_{PRB}$ represents the number of the PRBs occupied by the first part of PRBs of the first-type transport blocks in the downlink slot, $P$ represents the number of the second-type transport blocks in the downlink sub-band or guard sub-band of the SBFD time-frequency resource in the uplink slot, $p_{PRB}$ represents the number of the PRBs occupied by the fourth part of PRBs of the second-type transport blocks, $K$ represents the number of the second-type transport blocks only in the uplink slot, $n_{PRB}$ represents the number of the PRBs occupied by the second-type transport blocks, $Z$ represents the number of the first-type transport blocks in the F slot, $z_{PRB}$ represents the number of the PRBs occupied by the first part of PRBs of the first-type transport blocks in the F slot. Obviously, $L*l_{PRB}+P*p_{PRB}+K*n_{PRB}+Z*z_{PRB}$ represents the target number of the target PRBs.

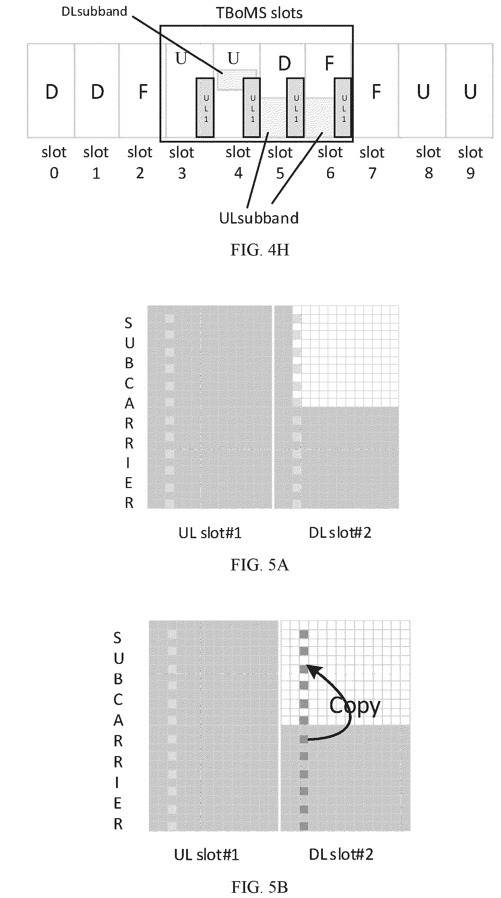

As shown in FIG. 4H, the total number $N$ of the transport blocks is 4, the number $L$ of the first-type transport blocks in the downlink slot can be 1, the number of the PRBs occupied by the first part of PRBs of the first-type transport block in the downlink slot can be $l_{PRB}$, the number $P$ of the second-type transport blocks in the downlink sub-band or guard sub-band of the SBFD time-frequency resource of uplink slot can be 1, the number of the PRBs occupied by the fourth part of PRBs of the second-type transport blocks can be $p_{PRB}$, the number $K$ of the second-type transport blocks only in the uplink slot can be 1, the number of the PRBs occupied by the second-type transport blocks can be $n_{PRB}$, the number $Z$ of the first-type transport blocks in the F slot can be 1, and the number of the PRBs occupied by the first part of PRBs of the first-type transport blocks in the F slot can be $z_{PRB}$.

Third, channel joint estimate method between OFDM symbols or slots is described below.

It is supposed that a part of the TBoMS resource is outside the uplink sub-band of the SBDF time-frequency resource, for example, the first part of PRBs of the TBoMS resource carrying the first-type transport blocks is in the uplink sub-band of the sub-band full-duplex (SBFD) time-frequency resource, and the second part of PRBs is outside the uplink sub-band of the SBFD time-frequency resource, when the second part of PRBs is used to carry demodulation reference signal (DMRS) in the uplink data, the DMRS cannot be sent, and thus, joint channel estimate (physical uplink control channel (PUSCH) joint estimate) cannot be carried out. For the discovery, a channel joint estimate method between orthogonal frequency division multiplexing (OFDM) symbols or slots is provided in this embodiment and thus the channel joint estimate can be performed.

In an example, the channel joint estimate method between OFDM symbols or slots is applicable to the DL slot, the UL slot and the flexible slot. For example, if the second part of PRBs is outside the uplink sub-band of the SBFD time-frequency resource of the DL slot, the channel joint estimate method can be adopted. Alternatively, if the second part of PRBs is outside the uplink sub-band of the SBFD time-frequency resource of the flexible slot, the channel joint estimate method can be adopted. Alternatively, if the second part of PRBs is in the downlink sub-band of the SBFD time-frequency resource of the UL slot, the channel joint estimate method can also be adopted. No limitation is made hereto.

In an example, if the second part of PRBs of the first-type transport blocks is outside the uplink sub-band of the SBFD time-frequency resource, and the second part of PRBs is configured to carry DMRS in the uplink data, the UE sends the DMRS to the base station equipment based on the TBoMS resource, and the base station equipment performs joint channel estimate on the uplink data based on the DMRS. Alternatively, the UE forbids sending the DMRS to the base station equipment based on the TBoMS resource, and the base station equipment performs joint channel estimate on the uplink data, or cancels the joint channel estimate on the uplink data.

For example, if the second part of PRBs of the first-type transport blocks is outside the uplink sub-band of the SBFD time-frequency resource, and the second part of PRBs is used to carry DMRS in the uplink data, the UE and the base station equipment can agree in advance on a DMRS transmission mode, or, the UE selects a DMRS transmission mode or the base station equipment selects a DMRS transmission mode and sends the DMRS transmission mode to the UE. The DMRS transmission mode can include that the UE sends DMRS to the base station equipment, or the UE forbids sending DMRS to the base station equipment.

In an example, if the UE sends DMRS to the base station equipment based on the TBoMS resource, the base station equipment performs joint channel estimate on the uplink data based on the DMRS. For example, the base station equipment can obtain a target channel estimate result corresponding to the second part of PRBs of the first-type transport blocks, and based on the target channel estimate result, perform joint channel estimate on the uplink data. Herein, the joint channel estimate method is not limited herein.

If the UE forbids sending DMRS to the base station equipment based on the TBoMS resource, the base station equipment can perform joint channel estimate on the uplink data. For example, the base station equipment can obtain the target channel estimate result corresponding to the second part of PRBs of the first-type transport blocks, and based on the target channel estimate result, perform joint channel estimate on the uplink data. Alternatively, the base station equipment can cancel the joint channel estimate on the uplink data, that is, cancel the joint channel estimate performed on the uplink data based on the target channel estimate result corresponding to the second part of PRBs.

The joint channel estimate method of the base station equipment is described below.

First joint channel estimate method: for partially-lost DMRSs, all or part of the joint channel estimate is cancelled. For example, the UE does not send DMRS to the base station equipment, and the base station equipment cancels the joint channel estimate performed on the uplink data based on the target channel estimate result corresponding to the second part of PRBs.

FIG. 5A is a schematic diagram illustrating a joint channel estimate method. A part of PRBs (e.g., the second part of PRBs of the first-type transport blocks) of the DLslot#2 (downlink slot #2) cannot send uplink DMRS due to configuration of DLsubband/guard subband (that is, the second part of PRBs is outside the uplink sub-band of the SBFD time-frequency resource, and the second part of PRBs is configured to carry DMRS in the uplink data), and hence, the frequency domain resource corresponding to ULslot#1 cannot carry out the joint channel estimate. Therefore, the base station equipment can cancel all or part of the joint channel estimate on ULslot#1. A part of the joint channel estimate being cancelled is taken as an example, only the joint channel estimate of the frequency domain data corresponding to the first PRB is cancelled, resulting in less performance loss than all cancellation.

Second joint channel estimate method: the uplink DMRS is sent only in the configuration region of the DLsubband/guard subband (downlink sub-band/guard sub-band). For example, the UE sends DMRS only in the second part of PRBs of the first-type transport blocks, that is, the second part of PRBs include the DMRS. The base station equipment determines a target DMRS based on the DMRS in the second part of PRBs, and based on the target DMRS, determines the target channel estimate result, and then based on the target channel estimate result, performs the joint channel estimate on the uplink data. The joint channel estimate method is not limited herein.

With reference to FIG. 5A, although a part of PRBs of DLslot#2 (e.g., the second part of PRBs of the first-type transport blocks , which is used to carry DMRS) is outside the uplink sub-band of the SBFD time-frequency resource, that is, the second part of PRBs is in DLsubband/guard subband, however, the UE still sends DMRS in the second part of PRBs, that is, sends the DMRS only in the DLsubband/guard subband but does not send other uplink data other than the DMRS in the second part of PRBs. Although interference may be generated for the downlink data of the symbol/slot where the SBFD time-frequency resource is, such interference can be avoided by interference measurement and beamforming and the like. Based on this, since the second part of PRBs includes DMRS, the base station equipment can determine the DMRS in the second part of PRBs as the target DMRS, and based on the target DMRS, determine the target channel estimate result.

Third joint channel estimate method: the UE does not send uplink DMRS in the configuration region of DLsubband/guard subband, and the base station equipment takes a channel estimate result of neighboring PRBs as the channel estimate result of the second part of PRBs. For example, the UE does not send DMRS to the base station equipment, that is, the second part of PRBs does not include DMRS, the base station equipment may, based on the channel estimate result of the neighboring PRBs of the second part of PRBs, determine the target channel estimate result, that is, determine the channel estimate result of the neighboring PRBs directly as the target channel estimate result, and then based on the target channel estimate result, perform joint channel estimate on the uplink data. The joint channel estimate method is not limited herein.

As shown in FIG. 5B, it is a schematic diagram illustrating a joint channel estimate method. A part of PRBs of the DLslot#2 (e.g., the second part of PRBs of the first-type transport blocks, which is configured to carry DMRS) cannot send uplink DMRS, and thus, the base station equipment may take a channel estimate result of neighboring PRBs of the second part of PRBs as the target channel estimate result of the second part of PRBs, and then perform joint channel estimate based on the target channel estimate result. Because the channel estimate result of the neighboring PRBs of the second part of PRBs is used, factors such as frequency-selective channel resulting from multipath effect can be taken into account, which is not limited herein.

Fourth joint channel estimate method: the UE sends DMRS, for example, the UE places the DMRS that cannot be sent on a closest PRB capable of sending data and corresponding to the OFDM symbol or additional DMRS symbol. For example, the UE sends the DMRS corresponding to the second part of PRBs in the neighboring PRBs of the second part of PRBs. In other words, the second part of PRBs does not include DMRS, and the neighboring PRBs of the second part of PRBs include DMRS corresponding to the second part of PRBs, and thus, the base station equipment, based on the DMRS in the neighboring PRBs, determines the target DMRS corresponding to the second part of PRBs (for example, take the DMRS in the neighboring PRBs as the target DMRS), and based on the target DMRS, determines the target channel estimate result, and then based on the target channel estimate result, performs joint channel estimate. The joint channel estimate method is not limited herein.

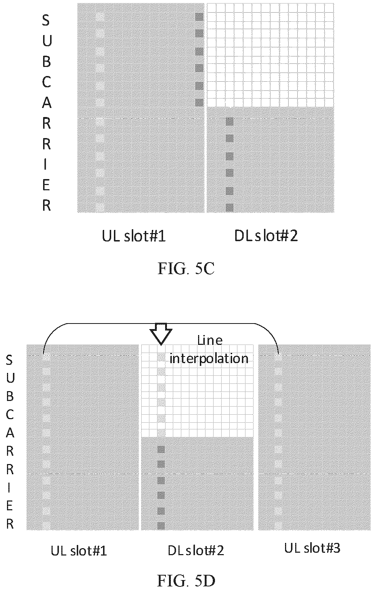

FIG. 5C is a schematic diagram illustrating a joint channel estimate method. A part of PRBs of DLslot#2 (e.g., the second part of PRBs of the first-type transport blocks, which is configured to carry DMRS) cannot send uplink DMRS, and thus the UE can send the DMRS corresponding to the second part of PRBs in the neighboring PRBs of the second part of PRBs, for example, send the DMRS corresponding to the second part of PRBs in the PRB corresponding to the last OFDM symbol of ULslot#1. Based on this, the base station equipment can obtain the target DMRS corresponding to the second part of PRBs from the PRBs corresponding to the last OFDM symbol of ULslot#1, and based on the target DMRS, determine the target channel estimate result, so as to accurately perform joint channel estimate. When determining the sending position of the DMRS and calculating the transport blocks (TBs), resource elements (RE) occupied by the DMRS can be removed.

Fifth joint channel estimate method: without limitation of 14 symbols of the joint channel estimate, the subsequent DMRS is configured to perform linear interpolation to carry out the joint channel estimate, or a channel estimate value of not sending DMRS is firstly obtained and then the joint channel estimate is performed. For example, the UE does not send DMRS to the base station equipment, that is, the second part of PRBs does not include DMRS, and thus the base station equipment performs linear interpolation on the DMRS in previous PRBs of the second part of PRBs and the DMRS in next PRBs of the second part of PRBs to obtain the target DMRS corresponding to the second part of PRBs, and then based on the target DMRS, determines the target channel estimate result, and then based on the target channel estimate result, performs joint channel estimate on the uplink data. The joint channel estimate method is not limited herein.

FIG. 5D is a schematic diagram illustrating a joint channel estimate method. A part of PRBs of DLslot#2 (e.g., the second part of PRBs of the first-type transport blocks, which is configured to carry DMRS) cannot send uplink DMRS, and thus, the base station equipment can perform linear interpolation on the DMRS in previous PRBs (e.g., the PRBs of ULslot#1) of the second part of PRBs and the DMRS of next PRBs (e.g., the PRBs of ULslot#3) of the second part of PRBs to obtain the target DMRS corresponding to the second part of PRBs. The fifth joint channel estimate method can be applied to gradually-changing channels and/or low-speed mobile users.

In an example, when only front-loaded DMRS is configured, if the entire DMRS symbol cannot be sent, the DMRS can be transferred forward or backward to a first available OFDM symbol; or if there are a first DMRS and additional DMRS, only one DMRS is lost, the above method can be used. However, in a case of overlap with the additional DMRS, it is not required to transfer or only ONLY additional DMRS is adopted to perform channel estimate and joint channel estimate, as shown in FIG. 5D, the front-loaded DMRS can be transferred backward to an available symbol, preferably, to the first symbol.

It can be seen from the above technical solutions that in a case of overlap between the SBFD time-frequency resource and the TBoMS resource, the UE can perform data transmission by making full use of the TBoMS resource, and transmit the uplink data of the TBoMS resource by using the SBFD time-frequency resource (i.e., uplink sub-band) of the downlink slot. In this way, the transmission reliability of the uplink data and the cell coverage radius can be further improved, such that the SBFD time-frequency resource configuration and the TBoMS transmission mechanism can be effectively combined and implemented. From the aspect of entire system, the cell coverage scope can be increased, the transmission delay can be reduced, and the uplink transmission capacity can be increased. Hence, the data transmission of the TDD system can be supported; the resource utilization rate is improved; the network coverage and the network capacity are enhanced; the uplink transmission resource and the cell coverage scope are increased; the uplink transmission delay is diminished; and the uplink transmission capacity is increased.

Based on a same invention idea, a data transmission apparatus corresponding to the above data transmission method, a base station equipment and a user equipment (UE) are provided. Since the principles of the base station equipment solving the problems and the UE solving the problems are similar to the above data transmission method, the base station equipment and the UE can be implemented by referring to the implementation of the above data transmission method and will not be repeated herein.

Based on the same invention idea as the above method, an example of the present disclosure provides a data transmission apparatus, which is applied in a user equipment. The apparatus includes: a receiving module, configured to receive a resource configuration message from a base station equipment, where the resource configuration message includes configuration information of a transport block over multiple slots (TBoMS) resource; a determining module, configured to determine, based on the configuration information of the TBoMS resource, the TBoMS resource; where the TBoMS resource carries N transport blocks, N is a positive integer greater than 1, and the TBoMS resource carrying first-type transport blocks included in the N transport blocks overlaps with an uplink sub-band of a sub-band full duplex (SBFD) time-frequency resource; a sending module, configured to send, based on the TBoMS resource, uplink data to the base station equipment.

In an example, the SBFD time-frequency resource is in a downlink slot or a flexible slot; if the TBoMS resource carrying only first-type transport blocks included in the N transport blocks overlaps with the uplink sub-band of the SBFD time-frequency resource, the receiving module, when receiving the resource configuration message from the base station equipment, is configured to: receive one resource configuration message from the base station equipment, where the resource configuration message includes configuration information of the first-type transport blocks, and the resource configuration message is a dynamic resource configuration message or a semi-static resource configuration message.

In an example, the SBFD time-frequency resource is in the downlink slot or the flexible slot; if the N transport blocks further include second-type transport blocks in an uplink slot, the receiving module, when receiving the resource configuration message from the base station equipment, is configured to: receive one resource configuration message from the base station equipment, where the one resource configuration message includes configuration information of the second-type transport blocks and the configuration information of the first-type transport blocks; where the resource configuration message is a dynamic resource configuration message or a semi-static resource configuration message; or, receive a first resource configuration message and a second resource configuration message from the base station equipment, where the first resource configuration message includes the configuration information of the second-type transport blocks, and the second resource configuration message includes the configuration information of the first-type transport blocks; where the first resource configuration message is a dynamic resource configuration message or a semi-static resource configuration message, and the second resource configuration message is a dynamic resource configuration message or a semi-static resource configuration message.

In an example, the N transport blocks occupy non-continuous symbols in N slots and each transport block occupies at least one symbol in one slot; or, the N transport blocks occupy non-continuous symbols in A slots, where A is a positive integer less than N; or, the N transport blocks occupy continuous symbols in B slots, where B is a positive integer less than N.

In an example, the sending module, when sending the uplink data to the base station equipment based on the TBoMS resource, is configured to: based on resource overlap between the TBoMS resource and the SBFD time-frequency resource, determine a target transport block bit number carried by the TBoMS resource, and based on the TBoMS resource, send uplink data matching the target transport block bit number to the base station equipment.

In an example, when, based on the resource overlap between the TBoMS resource and the SBFD time-frequency resource, determining the target transport block bit number carried by the TBoMS resource, the sending module is configured to: based on the resource overlap, determine a target number of target physical resource blocks (PRB), where the target PRBs are PRBs in the TBoMS resource and in the uplink sub-band of the SBFD time-frequency resource; based on the target number of the target PRBs and a bit number transmitted per PRB, determine the target transport block bit number carried by the TBoMS resource.

When determining the target number of the target PRBs based on the resource overlap, the sending module is configured to: if the TBoMS resource carrying the first-type transport blocks is in the uplink sub-band of the SBFD time-frequency resource, based on the total number N of the transport blocks and the number of the PRBs occupied by the transport blocks, determine the target number of the target PRBs; or, if a first part of PRBs of the TBoMS resource carrying the first-type transport blocks is in the uplink sub-band of the SBFD time-frequency resource, and a second part of PRBs is outside the uplink sub-band of the SBFD time-frequency resource, based on the total number N of the transport blocks, the number of the PRBs occupied by the transport blocks, the number of the first-type transport blocks, and the number of the PRBs occupied by the second part of PRBs, determine the target number of the target PRBs; or, based on the number of the second-type transport blocks, the number of the PRBs occupied by the transport blocks, the number of the first-type transport blocks, and the number of the PRBs occupied by the first part of PRBs, determine the target number of the target PRBs.

When determining the target number of the target PRBs based on the resource overlap, the sending module is configured to: if the first part of PRBs of the TBoMS resource carrying the first-type transport blocks is in the uplink sub-band of the SBFD time-frequency resource, the second part of PRBs is outside the uplink sub-band of the SBFD time-frequency resource, a third part of PRBs of the TBoMS resource carrying the second-type transport blocks is in a downlink sub-band or guard sub-band of the SFBD time-frequency resource of the uplink slot, and a fourth part of PRBs is in a non-SBFD time-frequency resource of the uplink slot, based on the total number N of the transport blocks, the number of the PRBs occupied by the transport blocks, the number of the first-type transport blocks, the number of the PRBs occupied by the second part of PRBs, the number of the second-type transport blocks and the number of the PRBs occupied by the third part of PRBs, determine the target number of the target PRBs; or based on the number of the first-type transport blocks, the number of the PRBs occupied by the first part of PRBs, the number of the second-type transport blocks, and the number of the PRBs occupied by the fourth part of PRBs, determine the target number of the target PRBs.

In an example, when sending the uplink data to the base station equipment based on the TBoMS resource, the sending module is configured to: if the first part of PRBs of the TBoMS resource carrying the first-type transport blocks is in the uplink sub-band of the SBFD time-frequency resource, the second part of PRBs is outside the uplink sub-band of the SBFD time-frequency resource, and the second part of PRBs is configured to carry a demodulation reference signal (DMRS) in the uplink data, based on the TBoMS resource, send the DMRS to the base station equipment, such that the base station equipment performs joint channel estimate on the uplink data based on the DMRS; or, forbid sending the DMRS to the base station equipment based on the TBoMS resource, such that the base station equipment performs joint channel estimate on the uplink data or cancels joint channel estimate on the uplink data.

Based on the same invention idea as the above method, an example of the present disclosure provides a data transmission apparatus which is applied in a base station equipment. The apparatus includes: an assigning module, configured to assign a transport block over multiple slots (TBoMS) resource to a user equipment, where the TBoMS resource carries N transport blocks, N is a positive integer greater than 1, and the TBoMS resource carrying first-type transport blocks included in the N transport blocks overlaps with an uplink sub-band of a sub-band full duplex (SBFD) time-frequency resource; a sending module, configured to send a resource configuration message to the user equipment, where the resource configuration message includes configuration information of the TBoMS resource, and where the user equipment determines the TBoMS resource based on the configuration information of the TBoMS resource, and based on the TBoMS resource, sends uplink data to the base station equipment; a receiving module, configured to receive the uplink data sent by the user equipment based on the TBoMS resource.

In an example, the SBFD time-frequency resource is in a downlink slot or a flexible slot; if the TBoMS resource carrying only first-type transport blocks included in the N transport blocks overlaps with the uplink sub-band of the SBFD time-frequency resource, the sending module, when sending the resource configuration message to the user equipment, is configured to: send a resource configuration message to the user equipment, where the resource configuration message includes configuration information of the first-type transport blocks, and the resource configuration message is a dynamic resource configuration message or a semi-static resource configuration message.

In an example, the SBFD time-frequency resource is in the downlink slot or the flexible slot; if the N transport blocks further include second-type transport blocks in an uplink slot, the sending module, when sending the resource configuration message to the user equipment, is configured to: send a resource configuration message to the user equipment, where the resource configuration message includes configuration information of the second-type transport blocks and the configuration information of the first-type transport blocks, and the resource configuration message is a dynamic resource configuration message or a semi-static resource configuration message; or, send a first resource configuration message and a second resource configuration message to the user equipment, where the first resource configuration message includes the configuration information of the second-type transport blocks, and the second resource configuration message includes the configuration information of the first-type transport blocks; the first resource configuration message is a dynamic resource configuration message or a semi-static resource configuration message, and the second resource configuration message is a dynamic resource configuration message or a semi-static resource configuration message.

In an example, the N transport blocks occupy non-continuous symbols in N slots and each transport block occupies at least one symbol in one slot; or, the N transport blocks occupy non-continuous symbols in A slots, where A is a positive integer less than N; or, the N transport blocks occupy continuous symbols in B slots, where B is a positive integer less than N.

In an example, the apparatus further includes: a processing module, configured to, if a first part of PRBs of the TBoMS resource carrying the first-type transport blocks is in the uplink sub-band of the SBFD time-frequency resource and a second part of PRBs is outside the uplink sub-band of the SBFD time-frequency resource, and the second part of PRBs is configured to carry a demodulation reference signal (DMRS) in the uplink data, obtain a target channel estimate result corresponding to the second part of PRBs; and based on the target channel estimate result, perform joint channel estimate on the uplink data.

In an example, when obtaining the target channel estimate result corresponding to the second part of PRBs, the processing module is configured to: if the second part of PRBs includes DMRS, determine a target DMRS based on the DMRS in the second part of PRBs, and based on the target DMRS, determine the target channel estimate result; where the user equipment sends the DMRS only in the second part of PRBs; or, if the second part of PRBs does not include the DMRS, determine the target channel estimate result based on a channel estimate result of neighboring PRBs of the second part of PRBs; or, if the second part of PRBs does not include the DMRS, and the neighboring PRBs of the second part of PRBs include the DMRS corresponding to the second part of PRBs, determine the target DMRS based on the DMRS in the neighboring PRBs, and based on the target DMRS, determine the target channel estimate result; where the user equipment sends the DMRS corresponding to the second part of PRBs in the neighboring PRBs; or, if the second part of PRBs does not include the DMRS, perform linear interpolation on the DMRS in previous PRBs of the second part of PRBs and DMRS in next PRBs to obtain the target DMRS corresponding to the second part of PRBs, and then based on the target DMRS, determine the target channel estimate result.

In an example, the processing module is configured to, if the first part of PRBs of the TBoMS resource carrying the first-type transport blocks is in the uplink sub-band of the SBFD time-frequency resource, and the second part of PRBs is outside the uplink sub-band of the SBFD time-frequency resource, and the second part of PRBs is configured to carry a demodulation reference signal (DMRS) in the uplink data, cancel the joint channel estimate performed on the uplink data based on the target channel estimate result corresponding to the second part of PRBs.

Based on the same invention idea as the above method, an example of the present disclosure provides an electronic device (e.g., the base station equipment or UE as mentioned above). The electronic device can include a processor and a machine-readable storage medium, where the machine-readable storage medium stores machine-executable instructions executable by the processor; and the processor is configured to execute the machine-executable instructions to perform the data transmission method disclosed in the above examples of the present disclosure.

Based on the same invention idea as the above method, an example of the present disclosure provides a machine-readable storage medium, storing several computer instructions, where the computer instructions are executed by a processor to perform the data transmission method disclosed in the above examples of the present disclosure.

The machine-readable storage medium mentioned herein may be any of electronic, magnetic, optical or other physical storage devices and may contain or store information such as executable instructions, data and so on. For example, the machine-readable storage medium may be random access memory (RAM), volatile or non-volatile memory, a flash memory, a storage drive (e.g., hard disk drive), a solid-state hard disk, any type of storage disk (e.g., compact disk, digital video disk (DVD)), or a similar storage medium, or a combination thereof.

The systems, apparatuses, modules or units described in the above examples can be specifically implemented by a computer entity or can be implemented by a product with a particular function. A typical implementing device can be a computer and the computer can be specifically a personal computer, a laptop computer, a cellular phone, a camera phone, a smart phone, a personal digital assistant, a media player, a navigation device, an email transceiver, a game console, a tablet computer, a wearable device, or a combination of any several devices of the above devices.

The foregoing descriptions are made only on examples of the present disclosure but not intended to limit the present disclosure. For the persons skilled in the art, various modifications and changes can be made to the present disclosure. Any modifications, equivalent substitutions, and improvements made within the spirit and principles of the disclosure shall be encompassed in the scope of protection of the present disclosure.

**Claims**

1. A data transmission method, performed by a user equipment, and comprising:

    receiving a resource configuration message from a base station equipment, wherein the resource configuration message comprises configuration information of a transport block over multiple slots (TBoMS) resource; determining, based on the configuration information of the TBoMS resource, the TBoMS resource; wherein the TBoMS resource carries N transport blocks, N is a positive integer greater than 1, and the TBoMS resource carrying first-type transport blocks comprised in the N transport blocks overlaps with an uplink sub-band of a sub-band full duplex (SBFD) time-frequency resource; and sending, based on the TBoMS resource, uplink data to the base station equipment.

2. The method of claim 1, wherein the SBFD time-frequency resource is in a downlink slot or a flexible slot; if the TBoMS resource carrying only the first-type transport blocks comprised in the N transport blocks overlaps with the uplink sub-band of the SBFD time-frequency resource, receiving the resource configuration message from the base station equipment comprises:
    receiving one resource configuration message from the base station equipment, wherein the resource configuration message comprises configuration information of the first-type transport blocks, and wherein the resource configuration message is a dynamic resource configuration message or a semi-static resource configuration message.

3. The method of claim 1, wherein the SBFD time-frequency resource is in a downlink slot or a flexible slot; if the N transport blocks further comprise second-type transport blocks in an uplink slot, receiving the resource configuration message from the base station equipment comprises:

    receiving one resource configuration message from the base station equipment, wherein the one resource configuration message comprises configuration information of the second-type transport blocks and the configuration information of the first-type transport blocks; wherein the one resource configuration message is a dynamic resource configuration message or a semi-static resource configuration message; or,
receiving a first resource configuration message and a second resource configuration message, wherein the first resource configuration message comprises the configuration information of the second-type transport blocks, and the second resource configuration message comprises the configuration information of the first-type transport blocks; wherein the first resource configuration message is a dynamic resource configuration message or a semi-static resource configuration message, and the second resource configuration message is a dynamic resource configuration message or a semi-static resource configuration message.

4. The method of claim 3, wherein the N transport blocks occupy non-continuous symbols in N slots and each transport block occupies at least one symbol in one slot;

or, the N transport blocks occupy non-continuous symbols in A slots, wherein A is a positive integer less than N;
or, the N transport blocks occupy continuous symbols in B slots, wherein B is a positive integer less than N.

5. The method of any one of claims 1 to 4, wherein, sending the uplink data to the base station equipment based on the TBoMS resource comprises:

determining, based on resource overlap of the TBoMS resource and the SBFD time-frequency resource, a target transport block bit number carried by the TBoMS resource, and
based on the TBoMS resource, sending uplink data matching the target transport block bit number to the base station equipment.

6. The method of claim 5, wherein, determining, based on the resource overlap of the TBoMS resource and the SBFD time-frequency resource, the target transport block bit number carried by the TBoMS resource comprises:

determining, based on the resource overlap, a target number of target physical resource blocks (PRB), wherein the target PRBs are PRBs in the TBoMS resource and in the uplink sub-band of the SBFD time-frequency resource; and
determining, based on the target number of the target PRBs and a bit number transmitted per PRB, the target transport block bit number carried by the TBoMS resource.

7. The method of claim 6, wherein, determining the target number of the target PRBs based on the resource overlap comprises:

if the TBoMS resource carrying the first-type transport blocks is in the uplink sub-band of the SBFD time-frequency resource, based on a total number N of the transport blocks and a number of the PRBs occupied by the transport blocks, determining the target number of the target PRBs; or,
if a first part of PRBs of the TBoMS resource carrying the first-type transport blocks is in the uplink sub-band of the SBFD time-frequency resource, and a second part of PRBs is outside the uplink sub-band of the SBFD time-frequency resource,

based on the total number N of the transport blocks, the number of the PRBs occupied by the transport blocks, a number of the first-type transport blocks, and a number of the PRBs occupied by the second part of PRBs, determining the target number of the target PRBs; or,
based on a number of the second-type transport blocks, the number of the PRBs occupied by the transport blocks, the number of the first-type transport blocks, and a number of the PRBs occupied by the first part of PRBs, determining the target number of the target PRBs.

8. The method of claim 6, wherein, determining the target number of the target PRBs based on the resource overlap comprises:
if the first part of PRBs of the TBoMS resource carrying the first-type transport blocks is in the uplink sub-band of the SBFD time-frequency resource, the second part of PRBs is outside the uplink sub-band of the SBFD time-frequency resource, a third part of PRBs of the TBoMS resource carrying the second-type transport blocks is in a downlink sub-band or guard sub-band of the SFBD time-frequency resource of the uplink slot, and a fourth part of PRBs is in a non-SBFD time-frequency resource of the uplink slot,

based on a total number N of the transport blocks, a number of the PRBs occupied by the transport blocks, a number of the first-type transport blocks, a number of the PRBs occupied by the second part of PRBs, a number of the second-type transport blocks and a number of the PRBs occupied by the third part of PRBs, determining the target number of the target PRBs; or

based on the number of the first-type transport blocks, a number of the PRBs occupied by the first part of PRBs, the number of the second-type transport blocks, and a number of the PRBs occupied by the fourth part of PRBs, determining the target number of the target PRBs.

9. The method of any one of claims 1 to 4, wherein, sending the uplink data to the base station equipment based on the TBoMS resource comprises:

if a first part of PRBs of the TBoMS resource carrying the first-type transport blocks is in the uplink sub-band of the SBFD time-frequency resource, and a second part of PRBs is outside the uplink sub-band of the SBFD time-frequency resource, and the second part of PRBs is configured to carry a demodulation reference signal (DMRS) in the uplink data,

sending, based on the TBoMS resource, the DMRS to the base station equipment such that the base station equipment performs joint channel estimate on the uplink data based on the DMRS; or,

forbidding sending the DMRS to the base station equipment based on the TBoMS resource such that the base station equipment performs joint channel estimate on the uplink data or cancels joint channel estimate on the uplink data.

10. A data transmission method, performed by a base station equipment and comprising:

assigning a transport block over multiple slots (TBoMS) resource to a user equipment, wherein the TBoMS resource carries N transport blocks, N is a positive integer greater than 1, and the TBoMS resource carrying first-type transport blocks comprised in the N transport blocks overlaps with an uplink sub-band of a sub-band full duplex (SBFD) time-frequency resource;

sending a resource configuration message to the user equipment, wherein the resource configuration message comprises configuration information of the TBoMS resource; wherein the user equipment determines the TBoMS resource based on the configuration information of the TBoMS resource, and based on the TBoMS resource, sends uplink data to the base station equipment; and

receiving the uplink data sent by the user equipment based on the TBoMS resource.

11. The method of claim 10, wherein the SBFD time-frequency resource is in a downlink slot or a flexible slot; if the TBoMS resource carrying only the first-type transport blocks comprised in the N transport blocks overlaps with the uplink sub-band of the SBFD time-frequency resource, sending the resource configuration message to the user equipment comprises:

sending one resource configuration message to the user equipment, wherein the resource configuration message comprises configuration information of the first-type transport blocks, and wherein the resource configuration message is a dynamic resource configuration message or a semi-static resource configuration message.

12. The method of claim 10, wherein the SBFD time-frequency resource is in a downlink slot or the flexible slot; if the N transport blocks further comprise second-type transport blocks in an uplink slot, sending the resource configuration message to the user equipment comprises:

sending one resource configuration message to the user equipment, wherein the one resource configuration message comprises configuration information of the second-type transport blocks and the configuration information of the first-type transport blocks, and wherein the one resource configuration message is a dynamic resource configuration message or a semi-static resource configuration message; or,

sending a first resource configuration message and a second resource configuration message to the user equipment, wherein the first resource configuration message comprises the configuration information of the second-type transport blocks, and the second resource configuration message comprises the configuration information of the first-type transport blocks; wherein the first resource configuration message is a dynamic resource configuration message or a semi-static resource configuration message, and the second resource configuration message is a dynamic resource configuration message or a semi-static resource configuration message.

13. The method of claim 12, wherein the N transport blocks occupy non-continuous symbols in N slots and each transport block occupies at least one symbol in one slot;

or, the N transport blocks occupy non-continuous symbols in A slots, wherein A is a positive integer less than N; or, the N transport blocks occupy continuous symbols in B slots, wherein B is a positive integer less than N.

14. The method of any one of claims 10 to 13, further comprising:

if a first part of PRBs of the TBoMS resource carrying the first-type transport blocks is in the uplink sub-band of the SBFD time-frequency resource, and a second part of PRBs is outside the uplink sub-band of the SBFD time-frequency resource, and the second part of PRBs is configured to carry a demodulation reference signal (DMRS) in the uplink data, obtaining a target channel estimate result corresponding to the second part of PRBs; and performing, based on the target channel estimate result, joint channel estimate on the uplink data.

15. The method of claim 14, wherein, obtaining the target channel estimate result corresponding to the second part of PRBs comprises:

if the second part of PRBs comprise DMRS, determining a target DMRS based on the DMRS in the second part of PRBs, and based on the target DMRS, determining the target channel estimate result; wherein the user equipment sends the DMRS only on the second part of PRBs; or, if the second part of PRBs does not comprise the DMRS, determining the target channel estimate result based on a channel estimate result of neighboring PRBs of the second part of PRBs; or, if the second part of PRBs does not comprise the DMRS, and the neighboring PRBs of the second part of PRBs comprise the DMRS corresponding to the second part of PRBs, determining the target DMRS based on the DMRS in the neighboring PRBs, and based on the target DMRS, determining the target channel estimate result; wherein the user equipment sends the DMRS corresponding to the second part of PRBs on the neighboring PRBs; or, if the second part of PRBs does not comprise the DMRS, performing linear interpolation on the DMRS in previous PRBs of the second part of PRBs and DMRS in next PRBs to obtain the target DMRS corresponding to the second part of PRBs, and then based on the target DMRS, determining the target channel estimate result.

16. The method of any one of claims 10 to 13, further comprising:
if a first part of PRBs of the TBoMS resource carrying the first-type transport blocks is in the uplink sub-band of the SBFD time-frequency resource, and a second part of PRBs is outside the uplink sub-band of the SBFD time-frequency resource, and the second part of PRBs is configured to carry a demodulation reference signal (DMRS) in the uplink data, cancelling the joint channel estimate performed on the uplink data based on the target channel estimate result corresponding to the second part of PRBs.

17. A data transmission apparatus, applied to a user equipment and comprising:

a receiving module, configured to receive a resource configuration message from a base station equipment, wherein the resource configuration message comprises configuration information of a transport block over multiple slots (TBoMS) resource; a determining module, configured to determine, based on the configuration information of the TBoMS resource, the TBoMS resource; wherein the TBoMS resource carries N transport blocks, N is a positive integer greater than 1, and the TBoMS resource carrying first-type transport blocks comprised in the N transport blocks overlaps with an uplink sub-band of a sub-band full duplex (SBFD) time-frequency resource; and a sending module, configured to send, based on the TBoMS resource, uplink data to the base station equipment.

18. The apparatus of claim 17, wherein,
the SBFD time-frequency resource is in a downlink slot or a flexible slot; if the TBoMS resource carrying only the first-type transport blocks comprised in the N transport blocks overlaps with the uplink sub-band of the SBFD time-frequency resource, the receiving module, when receiving the resource configuration message from the base station equipment, is configured to:
receive one resource configuration message from the base station equipment, wherein the resource configuration message comprises configuration information of the first-type transport blocks, and wherein the resource configuration message is a dynamic resource configuration message or a semi-static resource configuration message.

19. The apparatus of claim 17, wherein the SBFD time-frequency resource is in a downlink slot or a flexible slot; if the N transport blocks further comprise second-type transport blocks in an uplink slot, the receiving module, when receiving the resource configuration message from the base station equipment, is configured to:

receive one resource configuration message from the base station equipment, wherein the one resource configuration message comprises configuration information of the second-type transport blocks and the configuration information of the first-type transport blocks; wherein the one resource configuration message is a dynamic resource configuration message or a semi-static resource configuration message; or,

receive a first resource configuration message and a second resource configuration message, wherein the first resource configuration message comprises the configuration information of the second-type transport blocks, and the second resource configuration message comprises the configuration information of the first-type transport blocks; wherein the first resource configuration message is a dynamic resource configuration message or a semi-static resource configuration message, and the second resource configuration message is a dynamic resource configuration message or a semi-static resource configuration message.

20. The apparatus of claim 19, wherein the N transport blocks occupy non-continuous symbols in N slots and each transport block occupies at least one symbol in one slot;

or, the N transport blocks occupy non-continuous symbols in A slots, wherein A is a positive integer less than N; or, the N transport blocks occupy continuous symbols in B slots, wherein B is a positive integer less than N.

21. The apparatus of any one of claims 17 to 20, wherein the sending module, when sending the uplink data to the base station equipment based on the TBoMS resource, is configured to determine:

based on resource overlap of the TBoMS resource and the SBFD time-frequency resource, a target transport block bit number carried by the TBoMS resource, and based on the TBoMS resource, send uplink data matching the target transport block bit number to the base station equipment.

22. The apparatus of claim 21, wherein, when, based on the resource overlap of the TBoMS resource and the SBFD time-frequency resource, determining the target transport block bit number carried by the TBoMS resource, the sending module is configured to:

determine, based on the resource overlap, a target number of target physical resource blocks (PRB), wherein the target PRBs are PRBs in the TBoMS resource and in the uplink sub-band of the SBFD time-frequency resource; and

determine, based on the target number of the target PRBs and a bit number transmitted per PRB, the target transport block bit number carried by the TBoMS resource.

23. The apparatus of claim 22, wherein, when determining the target number of the target PRBs based on the resource overlap, the sending module is configured to:

if the TBoMS resource carrying the first-type transport blocks is in the uplink sub-band of the SBFD time-frequency resource, based on a total number N of the transport blocks and a number of the PRBs occupied by the transport blocks, determine the target number of the target PRBs; or,

if a first part of PRBs of the TBoMS resource carrying the first-type transport blocks is in the uplink sub-band of the SBFD time-frequency resource and a second part of PRBs is outside the uplink sub-band of the SBFD time-frequency resource,

based on the total number N of the transport blocks, the number of the PRBs occupied by the transport blocks, a number of the first-type transport blocks, and a number of the PRBs occupied by the second part of PRBs, determine the target number of the target PRBs; or,

based on a number of the second-type transport blocks, the number of the PRBs occupied by the transport blocks, the number of the first-type transport blocks, and a number of the PRBs occupied by the first part of PRBs, determine the target number of the target PRBs.

24. The apparatus of claim 22, wherein, when determining the target number of the target PRBs based on the resource overlap, the sending module is configured to:

if the first part of PRBs of the TBoMS resource carrying the first-type transport blocks is in the uplink sub-band of the SBFD time-frequency resource, the second part of PRBs is outside the uplink sub-band of the SBFD time-frequency resource, a third part of PRBs of the TBoMS resource carrying the second-type transport blocks is in a downlink sub-band or guard sub-band of the SFBD time-frequency resource of the uplink slot, and a fourth part of PRBs is in a non-SBFD time-frequency resource of the uplink slot,

based on a total number N of the transport blocks, a number of the PRBs occupied by the transport blocks, a number of the first-type transport blocks, a number of the PRBs occupied by the second part of PRBs, a number of the second-type transport blocks and a number of the PRBs occupied by the third part of PRBs, determine the target number of the target PRBs; or

based on the number of the first-type transport blocks, a number of the PRBs occupied by the first part of PRBs, the number of the second-type transport blocks, and a number of the PRBs occupied by the fourth part of PRBs, determine the target number of the target PRBs.

25. The apparatus of any one of claims 17 to 20, wherein when sending the uplink data to the base station equipment based on the TBoMS resource, the sending module is configured to:

if a first part of PRBs of the TBoMS resource carrying the first-type transport blocks is in the uplink sub-band of the SBFD time-frequency resource, and a second part of PRBs is outside the uplink sub-band of the SBFD time-frequency resource, and the second part of PRBs is configured to carry a demodulation reference signal (DMRS) in the uplink data,

send, based on the TBoMS resource, the DMRS to the base station equipment such that the base station equipment performs joint channel estimate on the uplink data based on the DMRS; or,

forbid sending the DMRS to the base station equipment based on the TBoMS resource such that the base station equipment performs joint channel estimate on the uplink data or cancels joint channel estimate on the uplink data.

26. A data transmission apparatus, applied to a base station equipment and comprising:

an assigning module, configured to assign a transport block over multiple slots (TBoMS) resource to a user equipment, wherein the TBoMS resource carries N transport blocks, N is a positive integer greater than 1, and the TBoMS resource carrying first-type transport blocks comprised in the N transport blocks overlaps with an uplink sub-band of a sub-band full duplex (SBFD) time-frequency resource;

a sending module, configured to send a resource configuration message to the user equipment, wherein the resource configuration message comprises configuration information of the TBoMS resource; wherein the user equipment determines the TBoMS resource based on the configuration information of the TBoMS resource, and based on the TBoMS resource, sends uplink data to the base station equipment; and

a receiving module, configured to receive the uplink data sent by the user equipment based on the TBoMS resource.

27. The apparatus of claim 26, wherein the SBFD time-frequency resource is in a downlink slot or a flexible slot; if the TBoMS resource carrying only the first-type transport blocks comprised in the N transport blocks overlaps with the uplink sub-band of the SBFD time-frequency resource, the sending module, when sending the resource configuration message to the user equipment, is configured to:
send one resource configuration message to the user equipment, wherein the resource configuration message comprises configuration information of the first-type transport blocks, and wherein the resource configuration message is a dynamic resource configuration message or a semi-static resource configuration message.

28. The apparatus of claim 26, wherein the SBFD time-frequency resource is in a downlink slot or the flexible slot; if the N transport blocks further comprise second-type transport blocks in an uplink slot, the sending module, when sending the resource configuration message to the user equipment, is configured to:

send one resource configuration message to the user equipment, wherein the one resource configuration message comprises configuration information of the second-type transport blocks and the configuration information of the first-type transport blocks, and wherein the one resource configuration message is a dynamic resource configuration message or a semi-static resource configuration message; or,

send a first resource configuration message and a second resource configuration message to the user equipment, wherein the first resource configuration message comprises the configuration information of the second-type transport blocks, and the second resource configuration message comprises the configuration information of the first-type transport blocks; wherein the first resource configuration message is a dynamic resource configuration message or a semi-static resource configuration message, and the second resource configuration message is a dynamic resource configuration message or a semi-static resource configuration message.

29. The apparatus of claim 28, wherein the N transport blocks occupy non-continuous symbols in N slots and each transport block occupies at least one symbol in one slot;

or, the N transport blocks occupy non-continuous symbols in A slots, wherein A is a positive integer less than N;
or, the N transport blocks occupy continuous symbols in B slots, wherein B is a positive integer less than N.

30. The apparatus of any one of claims 26 to 29, further comprising:
a processing module, configured to, if a first part of PRBs of the TBoMS resource carrying the first-type transport blocks is in the uplink sub-band of the SBFD time-frequency resource and a second part of PRBs is outside the uplink sub-band of the SBFD time-frequency resource, and the second part of PRBs is configured to carry a demodulation reference signal (DMRS) in the uplink data, obtain a target channel estimate result corresponding to the second part of PRBs; and perform, based on the target channel estimate result, joint channel estimate on the uplink data.

31. The apparatus of claim 30, wherein, when obtaining the target channel estimate result corresponding to the second part of PRBs, the processing module is configured to:

if the second part of PRBs comprises DMRS, determine a target DMRS based on the DMRS in the second part of PRBs, and based on the target DMRS, determine the target channel estimate result; wherein the user equipment sends the DMRS only on the second part of PRBs; or,
if the second part of PRBs does not comprise the DMRS, determine the target channel estimate result based on a channel estimate result of neighboring PRBs of the second part of PRBs; or,
if the second part of PRBs does not comprise the DMRS and the neighboring PRBs of the second part of PRBs comprise the DMRS corresponding to the second part of PRBs, determine the target DMRS based on the DMRS in the neighboring PRBs, and based on the target DMRS, determine the target channel estimate result; wherein the user equipment sends the DMRS corresponding to the second part of PRBs on the neighboring PRBs; or,
if the second part of PRBs does not comprise the DMRS, perform linear interpolation on the DMRS in previous PRBs of the second part of PRBs and DMRS in next PRBs to obtain the target DMRS corresponding to the second part of PRBs, and then based on the target DMRS, determine the target channel estimate result.

32. The apparatus of any one of claims 26 to 29, further comprising:
a processing module, configured to, if a first part of PRBs of the TBoMS resource carrying the first-type transport blocks is in the uplink sub-band of the SBFD time-frequency resource, and a second part of PRBs is outside the uplink sub-band of the SBFD time-frequency resource, and the second part of PRBs is configured to carry a demodulation reference signal (DMRS) in the uplink data, cancel the joint channel estimate performed on the uplink data based on the target channel estimate result corresponding to the second part of PRBs.

33. An electronic device, comprising a processor and a machine-readable storage medium, wherein the machine-readable storage medium stores machine executable instructions executable by the processor; the processor is configured to execute the machine executable instructions to perform the method of any one of claims 1 to 16.

Receive a resource configuration message from a base station equipment, where the resource configuration message includes configuration information of a TBoMS resource; determine, based on the configuration information of the TBoMS resource, the TBoMS resource ⟋111

Send uplink data to the base station equipment based on the TBoMS resource ⟋112

FIG. 1A

Assign a TBoMS resource to a user equipment ⟋121

Send a resource configuration message to the user equipment, where the resource configuration message includes configuration information of the TBoMS resource; the user equipment determines the TBoMS resource based on the configuration information of the TBoMS resource, and sends uplink data to the base station equipment based on the TBoMS resource ⟋122

Receive the uplink data sent by the user equipment based on the TBoMS resource ⟋123

FIG. 1B

FIG. 2A

FIG. 2B

FIG. 2C

FIG. 2D

FIG. 2E

TBoMS slots

| | | | | | DLsub band | DLsub band | | | |
|---|---|---|---|---|---|---|---|---|---|
| D | D | F | U | U | D | D | F | U | U |

slot 0    slot 1    slot 2    slot 3    slot 4    slot 5    slot 6    slot 7    slot 8    slot 9

ULsubband

FIG. 3A

TBoMS slots

| | | | | | DLsub band | DLsub band | | | |
|---|---|---|---|---|---|---|---|---|---|
| D | D | F | U | U | F | F | F | U | U |

slot 0    slot 1    slot 2    slot 3    slot 4    slot 5    slot 6    slot 7    slot 8    slot 9

ULsubband

FIG. 3B

TBoMS slots

| | | | | | DLsub band | DLsub band | | | |
|---|---|---|---|---|---|---|---|---|---|
| D | D | F | U | U | D | F | F | U | U |

slot 0    slot 1    slot 2    slot 3    slot 4    slot 5    slot 6    slot 7    slot 8    slot 9

ULsubband

FIG. 3C

TBoMS slots

| | | | | | DLsub band | DLsub band | | | |
|---|---|---|---|---|---|---|---|---|---|
| D | D | F | U | U | D | D | F | U | U |

slot 0 slot 1 slot 2 slot 3 slot 4 slot 5 slot 6 slot 7 slot 8 slot 9

ULsubband

FIG. 3D

TBoMS slots

| | | | | | DLsub band | DLsub band | | | |
|---|---|---|---|---|---|---|---|---|---|
| D | D | F | U | U | D | D | F | U | U |

slot 0 slot 1 slot 2 slot 3 slot 4 slot 5 slot 6 slot 7 slot 8 slot 9

ULsubband

FIG. 3E

TBoMS slots

| | | DLsub band | DLsub band | | | | | | |
|---|---|---|---|---|---|---|---|---|---|
| D | D | F | U | U | D | D | F | U | U |

slot 0 slot 1 slot 2 slot 3 slot 4 slot 5 slot 6 slot 7 slot 8 slot 9

ULsubband

FIG. 3F

TBoMS slots

D D D D

D D F UL1 UL1 UL1 UL1 F U U

slot 0  slot 1  slot 2  slot 3  slot 4  slot 5  slot 6  slot 7  slot 8  slot 9

ULsubband

FIG. 4A

TBoMS slots    ULsubband

D D D D

D D F UL1 UL1 UL1 UL1 F U U

slot 0  slot 1  slot 2  slot 3  slot 4  slot 5  slot 6  slot 7  slot 8  slot 9

FIG. 4B

TBoMS slots

U U D D

D D F UL1 UL1 UL1 UL1 F U U

slot 0  slot 1  slot 2  slot 3  slot 4  slot 5  slot 6  slot 7  slot 8  slot 9

ULsubband

FIG. 4C

TBoMS slots    ULsubband

U U D D

D D F UL1 UL1 UL1 UL1 F U U

slot 0  slot 1  slot 2  slot 3  slot 4  slot 5  slot 6  slot 7  slot 8  slot 9

FIG. 4D

DLsubband  TBoMS slots

U  U  D  D

D  D  F  U  U  D  D  F  U  U

U  U  U  U
L  L  L  L
1  1  1  1

slot slot slot slot slot slot slot slot slot slot
 0    1    2    3    4    5    6    7    8    9

ULsubband

FIG. 4E

DLsubband  TBoMS slots

U  U  D  D

D  D  F  U  U  D  D  F  U  U

U  U  U  U
L  L  L  L
1  1  1  1

slot slot slot slot slot slot slot slot slot slot
 0    1    2    3    4    5    6    7    8    9

ULsubband

FIG. 4F

DLsubband  TBoMS slots

U  U  D  F

D  D  F  U  U  D  F  F  U  U

U  U  U  U
L  L  L  L
1  1  1  1

slot slot slot slot slot slot slot slot slot slot
 0    1    2    3    4    5    6    7    8    9

ULsubband

FIG. 4G

DLsubband    TBoMS slots

| slot 0 | slot 1 | slot 2 | slot 3 | slot 4 | slot 5 | slot 6 | slot 7 | slot 8 | slot 9 |

D    D    F    U    U    D    F    F    U    U

UL 1    UL 1    UL 1    UL 1

ULsubband

FIG. 4H

S
U
B
C
A
R
R
I
E
R

UL slot#1        DL slot#2

FIG. 5A

S
U
B
C
A
R
R
I
E
R

Copy

UL slot#1        DL slot#2

FIG. 5B

UL slot#1        DL slot#2

FIG. 5C

Line interpolation

UL slot#1     DL slot#2     UL slot#3

FIG. 5D

## INTERNATIONAL SEARCH REPORT

| International application No. |
|---|
| **PCT/CN2023/085093** |

| A. | CLASSIFICATION OF SUBJECT MATTER |
|---|---|

H04W 72/0446(2023.01)i

According to International Patent Classification (IPC) or to both national classification and IPC

| B. | FIELDS SEARCHED |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 资源, 配置, 指示, 跨, 时隙, 传输块, 子带, 全双工, 重叠, 上行, 发送, 传输, resource, configur+, indicat+, TBoMS, transport block, TB, over, slot?, subband, full duplex, overlap+, uplink, UL, transmi+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | XIAOMI. "Discussion on Subband Non-overlapping Full Duplex" *3GPP TSG RAN WG1 #112 R1-2300574*, 17 February 2023 (2023-02-17), text, section 2 | 1-33 |
| X | OPPO. "Discussion on Subband Non-overlapping Full Duplex" *3GPP TSG RAN WG1 #112 R1-2300287*, 17 February 2023 (2023-02-17), text, section 2 | 1-33 |
| X | CN 115868232 A (BEIJING XIAOMI MOBILE SOFTWARE CO., LTD.) 28 March 2023 (2023-03-28) description, paragraphs [0041]-[0178] | 1-33 |
| A | CN 115699667 A (QUALCOMM INC.) 03 February 2023 (2023-02-03) entire document | 1-33 |
| A | US 2022053550 A1 (QUALCOMM INC.) 17 February 2022 (2022-02-17) entire document | 1-33 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 December 2023** | **11 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/085093**

| Patent document cited in search report | | | Publication date (day/month/year) | Patent family member(s) | Publication date (day/month/year) |
|---|---|---|---|---|---|
| CN | 115868232 | A | 28 March 2023 | None | |
| CN | 115699667 | A | 03 February 2023 | None | |
| US | 2022053550 | A1 | 17 February 2022 | None | |

Form PCT/ISA/210 (patent family annex) (July 2022)